# EUROPEAN PATENT APPLICATION

(11) **EP 3 450 077 A1**
(43) Date of publication of application: **06.03.2019**
(21) Application number: 17789268.4
(22) Date of filing: 12.04.2017
(51) Int. Cl.: B23K 9/173, B23K 9/02, B23K 9/23, B23K 9/29

(54) **GAS-SHIELDED ARC WELDING SYSTEM AND GAS-SHIELDED ARC WELDING METHOD**

(30) Priority: 28.04.2016 JP 2016091389
(71) Applicant: Kabushiki Kaisha Kobe Seiko Sho (Kobe Steel, Ltd.), Kobe-shi, Hyogo 651-8585 (JP)
(72) Inventor: SUZUKI Reiichi, Kanagawa 251-8551 (JP); YUAN Yimin, Kanagawa 251-8551 (JP)
(74) Representative: Müller-Boré & Partner Patentanwälte PartG mbB
(86) International application number: PCT/JP2017/014951
(87) International publication number: WO 2017/187981

(57) **Abstract**

A plurality of welding torches (21A, 21 B), which are disposed in a welding device and are made movable in three-dimensional directions, are provided with welding wires (23A, 23B) that differ in composition and diameter from each other. When welding is performed in the horizontal direction, an arc (31) is generated by at least two of the welding torches (21A, 21B) to form a bead while the welding wires (23A, 23B) are being fed. When welding is performed in the vertical direction, the arc (31) is generated by any one welding torch (21B) of the two welding torches (21A, 21B) to form a bead while the welding wire (23B) is being fed. Thus, a steel sheet to which an anti-corrosion material has been applied can be welded continuously with high quality and high-efficiency in a horizontal orientation and vertical orientation.

## Description

### Technical Field

The present invention relates to a gas-shielded arc welding system and a gas-shielded arc welding method, more specifically relates to a gas-shielded arc welding system and a gas-shielded arc welding method for welding a steel plate having a surface coated with an anticorrosive material by gas-shielded arc welding using a plurality of welding torches each provided with a welding wire serving as a consumable electrode.

### Background Art

Steel structures such as ships or bridges are basically built by procedures of cutting steel, bending steel as necessary, three-dimensionally combining and joining the resultant members, and subjecting the joined members to finish coating. Among these steps, the joining is mainly performed by an arc welding method. Structures are three-dimensional and hence are welded in various positions such as a flat position, a horizontal position, a vertical position, and an overhead position. However, molten steel (molten pool) formed during arc welding is liquid, so that it is affected by gravity and tends to behave unstably. The flat position and an inclined flat position, which are less affected by gravity, are the most efficient and cause less welding defects, and serve as main positions in welding step equipment.

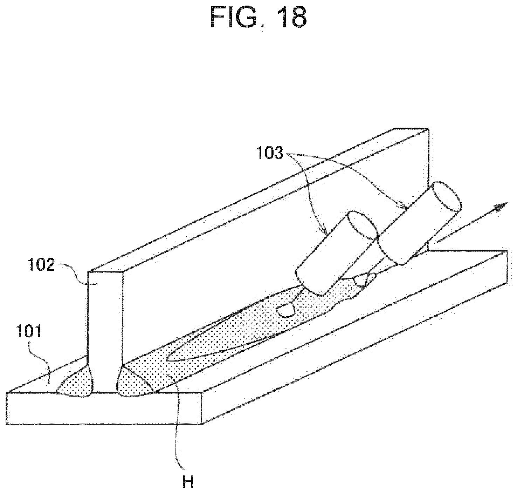

For example, as illustrated in Fig. 18, on a lower plate 101, which is a large-sized flat steel plate, a vertical plate 102, which is a reinforcing steel plate referred to as a rib or a stiffener, is disposed; and, a weld zone H is subjected to fillet welding in a horizontal position, to thereby enhance the stiffness of the structure. This step is relatively easily performed in terms of welding position. In general, fillet welding, which is performed for a large weld length, is desirably performed at high efficiency. For this reason, the following are applied: a large apparatus dedicated to horizontal fillet welding, referred to as a line welder, and equipped with a plurality of welding torches 103; and a simple welding carriage dedicated to horizontal fillet welding and equipped with a single welding torch. This application contributes to enhancement of the efficiency. Such automatic welding apparatuses basically eliminate the necessity of welders, which enables a reduction in the costs.

Patent Literature 1 and Patent Literature 2 state that a torch system of a combination of a plurality of welding torches, which are difficult to handle manually, what is called a tandem system, is applied to apparatuses, to thereby enhance the efficiency of horizontal fillet welding.

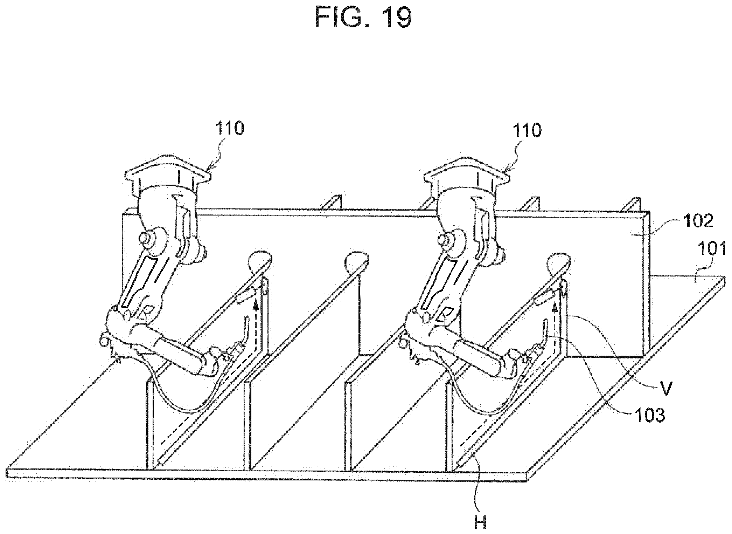

On the other hand, as illustrated in Fig. 19, it is unavoidable to have weld zones V, which are fewer in number and have smaller welding lengths than the horizontal-position weld zones (horizontal fillet welding) H, but are welded inevitably in a vertical position (vertical position). Welding in the vertical position is technically challenging and performed for small welding lengths, compared with welding in the flat position or the horizontal position; for these reasons, use of automatic welding apparatuses tends to be ineffective. Thus, the welding is often manually performed by welders at present.

There has been a strong need for automation of the vertical welding step, which is a less-automated welding step, in order to achieve a reduction in the total costs of welding steps. There has been another strong need for welding performed in a single space and with a single apparatus because the horizontal step and the vertical step that are performed in different lines and with different welding apparatuses are wasteful in terms of time, space, and plant and equipment investment.

The most promising method that can satisfy the needs is, as illustrated in Fig. 19, to use welding robots 110, which have a plurality of operation axes (joints) and can perform three-dimensionally complex motions, to perform welding continuously for the horizontal-position weld zone H and the vertical-position weld zone V. However, robotic welding has not been very widely employed for the following main reasons.
1. The welding speed is low, and the existing two-step welding is more efficient.
2. Porosity defects tend to be generated that are pores left within or in the surfaces of welding beads, and referred to as pits or blow holes.

For the welding robot 110, compared with the welding robot 110 equipped with a single welding torch 103, a tandem welding robot equipped with a plurality of welding torches 103 and a plurality of welding wires is employed advantageously in terms of welding speed and work efficiency; such tandem welding robots are disclosed in Patent Literature 3 and Patent Literature 4. Patent Literature 3 describes a torch switching method of switching between a single torch and a double torch in accordance with the weld zone. Patent Literature 4 discloses a two-electrode one-torch arc welding method in which two wires are fed through a single torch. The tandem welding robots described in Patent Literatures 3 and 4 are employed for relatively small structures in which the welding targets are always orientable in the flat position, such as construction machines or vehicles.

### Citation List

### Patent Literature

PTL 1: Japanese Patent No. 4964025
PTL 2: Japanese Patent No. 2614968
PTL 3: Japanese Patent No. 5074181
PTL 4: Japanese Patent No. 4864232

### Summary of Invention

### Technical Problem

Existing tandem welding robots are almost always provided with the same welding materials for convenience and ease of inventory control. However, in large structures such as bridges or ships, it is unrealistic to always orient welding targets in the flat position; thus, vertical-position weld zones V need to be welded also with tandem torches. In the case of welding in the vertical position, the molten pool tends to be unstable due to gravity; for this reason, it is very difficult and impractical for the tandem torches to stably control the molten pool, the tandem torches being configured to simultaneously strike two arcs to form two molten pools located close to each other, or a single molten pool. In other words, the vertical welding needs to be performed by single-electrode welding, and existing tandem welding robots are difficult to apply.

Hereinafter, characteristics of welding materials will be described. In order to perform the vertical welding at high efficiency, welding materials suitable for all welding positions need to be used. Specifically, the welding materials need to be flux cored wires containing a large amount of a slag component. This enables, in the surface of the molten pool during welding, solidification of the slag having a relatively high melting point, to prevent the molten pool from sagging due to gravity; this enables formation of stable welding beads even at relatively high current.

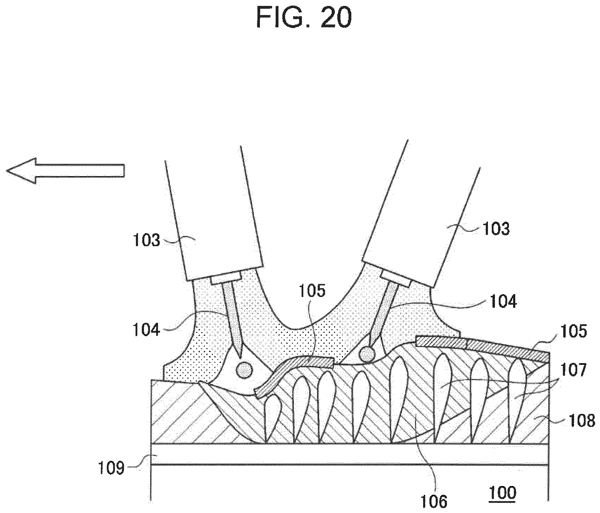

However, as illustrated in Fig. 20, when welding wires 104 suitable for all welding positions are applied to tandem torches 103 to perform horizontal fillet welding, a large amount of slag 105 causes generation of porosity defects, which is problematic. In building of a ship or a bridge, in order to prevent corrosion of a steel plate, the surface of a steel plate 100 serving as a welding target is often coated with a primer 109, which is an anticorrosive coating material. This primer 109 is vaporized by arc heat, and the resultant gas enters a molten pool 106. At this time, when the molten pool 106 has a large amount of slag 105, the gas is less likely to be discharged from the molten pool 106, which causes generation of a large amount of porosity defects 107 or even generation of long grooves referred to as gas grooves (not shown) at the boundary between a weld metal 108 and the slag 105; this results in considerable deterioration of the appearance, which is problematic.

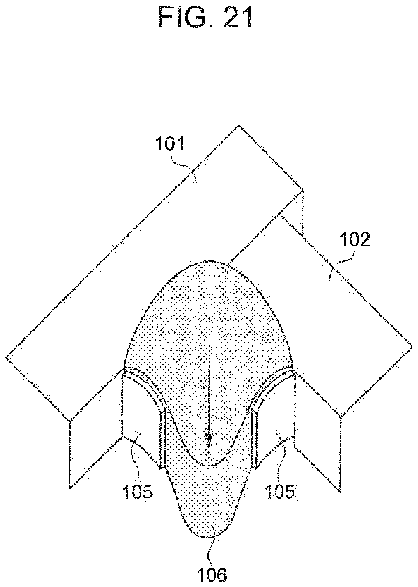

In general, horizontal fillet welding employs flux cored wires, which have an appropriately reduced slag generation amount, compared with all-welding-positions wires. Application of such wires to a tandem system solves problems in the horizontal position in terms of high speed and porosity defects. However, in the vertical position, as illustrated in Fig. 21, the amount of slag 105 is insufficient, so that the molten pool 106 tends to sag, which causes another problem of considerable degradation of the efficiency.

Incidentally, solid wires free from the slag component cause very poor bead shapes in horizontal fillet welding, and tend to generate spatters in commonly used gas shielding using carbon dioxide. In addition, in vertical welding, since the function of preventing sagging of the molten pool due to solidified slag is not provided at all, the bead is highly likely to sag; thus, in order to prevent sagging of the bead, the welding current and the welding speed need to be considerably decreased, which is inefficient. For these reasons, solid wires are seldom industrially used in the horizontal position and in the vertical position.

PTL 1 and PTL 2 describe welding methods for horizontal fillet welding, and do not mention welding in the vertical position. PTL 3 and PTL 4 describe welding methods relating to the torch switching method and the two-electrode one-torch welding, and such existing welding methods cannot weld, continuously, efficiently, or with sufficiently high quality, primer-coated steel plates in any position of the horizontal position and the vertical position.

The present invention has been made in view of the above-described problems. An object is to provide a gas-shielded arc welding system and a gas-shielded arc welding method that enable high-quality, high-efficiency, and continuous welding of primer-coated steel plates in any position of the horizontal position and the vertical position.

### Solution to Problem

The above-described object for the present invention is achieved with the following features.

Specifically, provided is a gas-shielded arc welding system for welding a steel plate having a surface coated with an anticorrosive material, the gas-shielded arc welding system including:
a welding apparatus including a plurality of welding torches each configured to feed a welding wire serving as a consumable electrode and to strike an arc between the welding wire and a welding target in a stream of shielding gas to achieve welding, the plurality of welding torches being disposed so as to be at least three-dimensionally movable,
wherein the plurality of welding torches at least include two welding torches different from each other in terms of composition of the welding wire and diameter of the welding wire,
when the welding torches are moved in a horizontal direction to perform welding, the welding wire is fed from at least each of the two welding torches and the arc is struck to form a bead, and
when the welding torches are moved in a vertical direction to perform welding, the welding wire is fed from one welding torch of the two welding torches and the arc is struck to form a bead.

In the gas-shielded arc welding system, preferably, the plurality of welding torches include at least three welding torches, and, when the welding torches are moved in a horizontal direction to perform welding, another welding torch other than the two welding torches is used to melt the steel plate by means of an arc, resistance heating, or heat conduction.

In the gas-shielded arc welding system, preferably, the welding wire of the welding torch used for welding in the vertical direction is a flux cored wire containing 3.0 to 18.0 wt% of a slag former relative to a total weight of the wire.

In the gas-shielded arc welding system, preferably, the welding wire of the welding torch used for welding in the vertical direction has a diameter of 1.2 mm.

In the gas-shielded arc welding system, preferably, the welding wire of a leading welding torch of the two welding torches used for welding in the horizontal direction is a solid wire, or a flux cored wire containing 2.5 wt% or less of a slag former relative to a total weight of the wire.

In the gas-shielded arc welding system, preferably, the welding wire of the leading welding torch has a diameter of 1.4 to 2.0 mm.

In the gas-shielded arc welding system, preferably, the welding wire of a trailing welding torch of the two welding torches used for welding in the horizontal direction is a flux cored wire containing 3.0 to 18.0 wt% of a slag former relative to a total weight of the wire, and the trailing welding torch is used for welding in the vertical direction.

In the gas-shielded arc welding system, preferably, in the two welding torches used for welding in the horizontal direction, the welding wire of a leading welding torch has a larger diameter than the welding wire of a trailing welding torch.

In the gas-shielded arc welding system, preferably, in the two welding torches for horizontal fillet welding, a torch angle of a leading welding torch is set to 20° to 40° relative to a lower plate, and a torch angle of a trailing welding torch is set to 42° to 60° relative to the lower plate.

In the gas-shielded arc welding system, preferably, in the two welding torches for horizontal fillet welding, a leading welding torch includes a shielding nozzle formed by obliquely cutting a portion of a cylindrical tip, and, during the horizontal fillet welding, the shielding nozzle is disposed such that a surface provided by the cutting faces a lower plate.

In the gas-shielded arc welding system, preferably, a welding torch not used during welding in the vertical direction is movable forward and backward in a feeding direction of the welding wire.

In the gas-shielded arc welding system, preferably, a welding torch not used during welding in the vertical direction is turnable relative to a weld line.

Further provided is a gas-shielded arc welding method including using the gas-shielded arc welding system, wherein, during horizontal fillet welding, in the welding wire of a leading welding torch, a current of 380 A or more is applied, and current/voltage is adjusted to be 12.0 or more and 18.0 or less in order to strike the arc as a buried arc.

In the gas-shielded arc welding method, preferably, during the horizontal fillet welding, current and voltage applied to the welding wire of a trailing welding torch are adjusted to a current/voltage of 8.0 or more and 11.0 or less in order not to strike a buried arc.

Incidentally, the "trailing welding torch" means a welding torch configured to trail the leading welding torch and to strike an arc, and refers to, for example, an "intermediate electrode" or a "trailing electrode" in embodiments.

### Advantageous Effects of Invention

In a gas-shielded arc welding system according to the present invention, a plurality of welding torches disposed in a welding apparatus so as to be three-dimensionally movable include welding wires that are different from each other in composition and diameter; in the case of welding in the horizontal direction, at least two welding torches are used to feed welding wires and to strike arcs to thereby form a bead; and, in the case of welding in the vertical direction, one of the welding torches is used to feed a welding wire and to strike an arc to thereby form a bead. This enables high-quality, high-efficiency, and continuous welding in any position of the horizontal position and the vertical position.

In a gas-shielded arc welding method according to the present invention, during horizontal fillet welding, in the welding wire of the leading welding torch, a current of 380 A or more is applied and the current/voltage is adjusted to be 12.0 or more and 18.0 or less in order to strike an arc as a buried arc; and the current and the voltage applied to the welding wire of the trailing welding torch are adjusted to a current/voltage of 8.0 or more and 11.0 or less in order not to strike a buried arc. Thus, the strong arc force of the buried arc struck by the leading welding torch enables smooth discharge of vaporized gas from the molten pool, and the arc struck by the trailing welding torch, having a large arc length, and not being a buried arc enables stable correction of a convex bead shape formed by the buried arc, to thereby form a bead having a good appearance.

### Brief Description of Drawings

[Fig. 1] Fig. 1 is a perspective view illustrating the schematic configuration of a welding system according to the present invention.
[Fig. 2] Fig. 2 illustrates the configuration of a two-electrode system.
[Fig. 3] Fig. 3 is a schematic view of a welding state with a two-electrode system.
[Fig. 4] Fig. 4 is a schematic view of using a solidified slag layer to correct the bead shape of a molten pool.
[Fig. 5] Fig. 5 is a graph illustrating preferred ranges of the ratios of slag formers added to a leading electrode and a trailing electrode.
[Fig. 6] Fig. 6 is a perspective view of performing horizontal fillet welding with a leading electrode and a trailing electrode that are different from each other in torch angle.
[Fig. 7] Fig. 7 includes a top view, a plan view, a side view, and a bottom view of a shielding nozzle formed by obliquely cutting a portion of the tip.
[Fig. 8] Fig. 8 is a schematic view of performing horizontal fillet welding with the shielding nozzle in Fig. 7 disposed such that the surface provided by the cutting faces a lower plate.
[Fig. 9A] Fig. 9A is a perspective view illustrating leg lengths in horizontal fillet welding.
[Fig. 9B] Fig. 9B is a perspective view illustrating leg lengths in vertical welding.
[Fig. 10] Fig. 10 is a graph of, in horizontal fillet welding, a relationship between the current/voltage ratio of an arc of a leading electrode and the current/voltage ratio of an arc of a trailing electrode.
[Fig. 11] Fig. 11 is a perspective view illustrating a leading electrode being retracted backward during vertical welding.
[Fig. 12] Fig. 12 is a perspective view illustrating a leading electrode being retracted by being turned to the same direction as the axis of a trailing electrode during vertical welding.
[Fig. 13] Fig. 13 illustrates the configuration of a three-electrode system according to a first modification.
[Fig. 14] Fig. 14 illustrates the configuration of a three-electrode system according to a second modification in which an intermediate electrode is a resistance-heating electrode.
[Fig. 15] Fig. 15 illustrates the configuration of a three-electrode system according to a third modification in which a trailing electrode is a resistance-heating electrode.
[Fig. 16] Fig. 16 illustrates the configuration of a three-electrode system according to a fourth modification in which an intermediate electrode is a heat-conduction electrode.
[Fig. 17] Fig. 17 illustrates the configuration of a three-electrode system according to a fifth modification in which a trailing electrode is a heat-conduction electrode.
[Fig. 18] Fig. 18 is a perspective view of performing horizontal fillet welding with two welding torches.
[Fig. 19] Fig. 19 is a perspective view of using welding robots to continuously perform horizontal fillet welding and vertical welding.
[Fig. 20] Fig. 20 is an explanatory view of welding actions of horizontal fillet welding being performed with tandem torches.
[Fig. 21] Fig. 21 is a perspective view of a molten pool sagging due to an insufficient amount of slag component during vertical welding.

### Description of Embodiments

Hereinafter, a gas-shielded arc welding system and a gas-shielded arc welding method according to an embodiment of the present invention will be described in detail with reference to drawings.

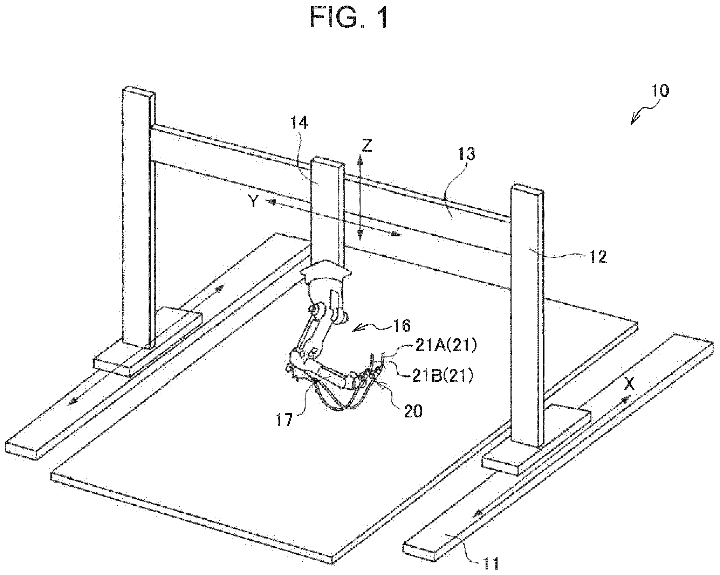

Fig. 1 is a schematic perspective view of a gas-shielded arc welding system according to an embodiment of the present invention, the system being configured to perform both of welding in the horizontal direction and welding in the vertical direction. Incidentally, although the vertical direction means the gravitational direction, from the viewpoint of welding engineering, weld lines having inclination angles of 45° or more are treated as with weld lines in the vertical direction.

As illustrated in Fig. 1, a welding system 10 includes a gate-type X-slidable support 12, which is disposed on a base support 11 so as to be movable in an X direction parallel to a weld line direction; a YZ-slidable unit 14 disposed so as to be movable along a coupling bar 13 of the X-slidable support 12 in a Y direction, which is orthogonal to the X direction, and in a Z direction, which is orthogonal to the X and Y directions; and a multi-joint robot 16 fixed to the YZ-slidable unit 14.

The multi-joint robot 16 includes an arm 17 at least including three joints, preferably five to seven joints, and includes, at the tip of the arm 17, a torch system 20 including a plurality of (in this embodiment, two) welding torches 21. In general, the multi-joint robot 16 includes a plurality of joints movable in circular directions to thereby achieve translational movements. Some of the joints may be constituted by joints referred to as sliders and having a function of moving translationally. As a result, the welding torches 21 are three-dimensionally movable such that their welding positions can be set to any desired positions.

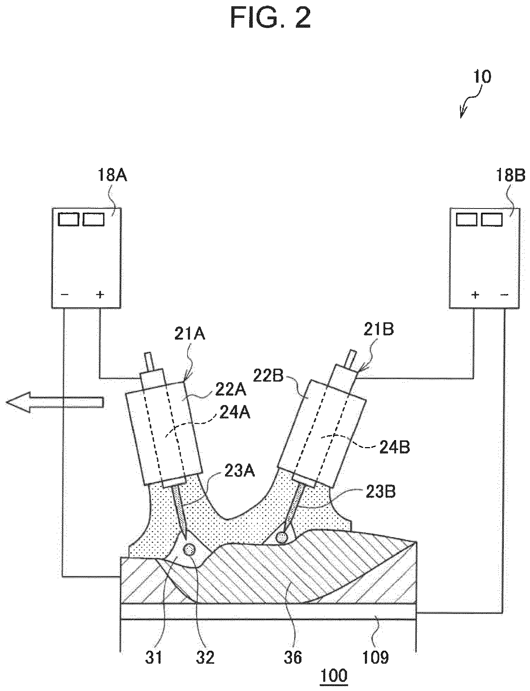

In order to perform two weldings that are welding in the horizontal direction and welding in the vertical direction (specifically, in this embodiment, horizontal fillet welding and vertical welding), the torch system 20 according to this embodiment includes at least two welding torches 21 (21A and 21B), which have different functions for performing welding. Specifically, in Fig. 2, a two-electrode tandem torch system 20 is used to perform horizontal fillet welding such that a first welding torch 21A is used as a leading welding torch, a second welding torch 21B is used as a trailing welding torch, and two welding wires 23A and 23B of the two welding torches 21A and 21B are simultaneously used to perform the welding. Alternatively, when vertical welding is performed, a welding wire 23 of one of the two welding torches 21 is used to perform the welding.

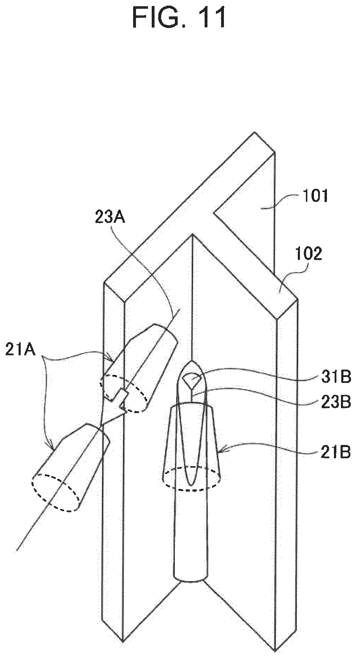

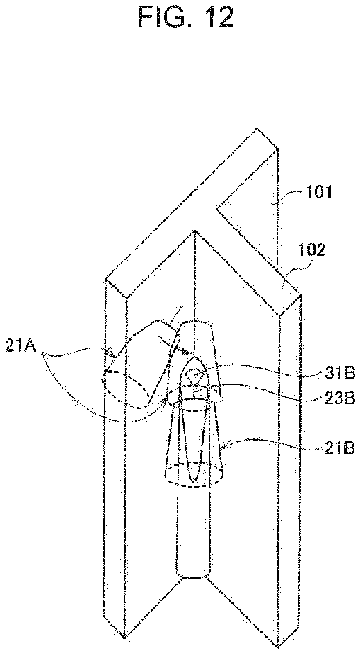

Of the two welding torches 21, the first welding torch 21A is attached to the tip of the arm 17, to which the second welding torch 21B is attached, via at least one of a mechanism for moving the first welding torch 21A forward and backward in a welding-wire feeding direction (refer to Fig. 11), and a mechanism for turning the first welding torch 21A relative to a weld line (refer to Fig. 12).

The welding system 10 includes a control device (not shown) including a position control unit configured to control the X-slidable support 12, the YZ-slidable unit 14, the multi-joint robot 16, and the welding torches 21 to locations and positions optimal for welding; a welding control unit configured to control, for example, the feeding speed of the welding wire to each welding torch 21, or the welding current of each welding torch 21; and a gas control unit configured to control the supply rate of a shielding gas supplied from a shielding-gas supply device to each welding torch 21.

The shielding gas used in this embodiment may be a commonly used gas species such as CO₂, Ar, or He alone, or a gas mixture thereof. However, CO₂ gas is preferred because it has high cost effectiveness and generates a strong arc force.

Referring to Fig. 2, the welding torches 21 (21A and 21B) respectively include shielding nozzles 22 (22A and 22B), which are substantially tubular and through which the shielding gas is supplied; contact tips 24 (24A and 24B), which are disposed within the shielding nozzles 22; and welding wires 23 (23A and 23B), which are consumable electrodes which are held by the contact tips 24 and to which welding currents are supplied from welding power supply devices 18A and 18B. The welding torches 21 are each configured to feed the welding wire 23, and, in a stream of the shielding gas, to strike an arc 31 between the welding wire 23 and a steel plate 100 serving as a welding target and having a surface coated with a primer 109, to thereby weld the steel plate 100.

The welding wires 23 fed to the welding torches 21 have different compositions and different diameters. In other words, the welding wires 23 are selected so as to have compositions and diameters that provide an optimal combination of the welding wire 23 for horizontal fillet welding and the welding wire 23 for vertical welding. The "composition of a wire" means both of the difference in form between a solid wire and a flux cored wire, and the difference in flux composition of a flux cored wire.

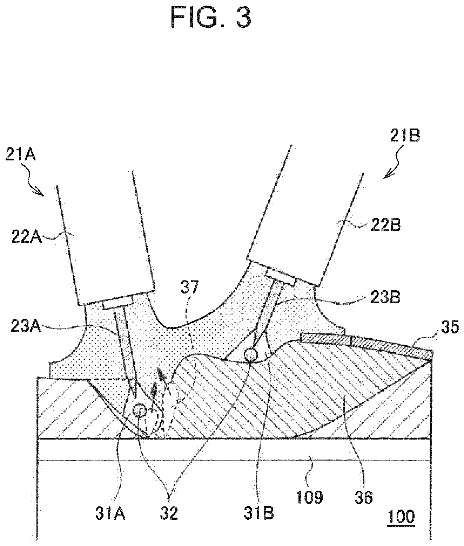

As illustrated in Fig. 3, during horizontal fillet welding, in order to prevent porosity defects due to vaporization of the primer 109 applied to the surface of the steel plate 100, it is important to promote smooth discharge of vaporized gas 37. In order to achieve this, the following are important: i) deep penetration is caused immediately below an arc to form a cavity, ii) the amount of slag is minimized that acts as a lid for inhibiting discharge of the vaporized gas 37, and iii) the thickness of the molten pool 36 immediately below an arc is reduced. Incidentally, in a tandem welding method using a plurality of welding wires 23A and 23B to form the molten pool 36, the vaporized gas 37 of the primer 109 is discharged, from the molten pool 36, only immediately below an arc 31A of the leading electrode (the welding wire 23A of the leading first welding torch 21A), and this effect is not provided by an arc 31B of the second or later electrode.

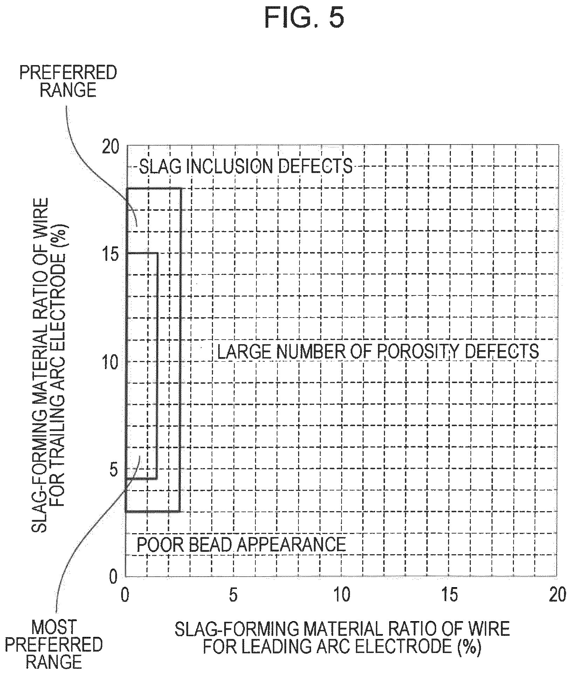

Thus, as the welding wire 23A of the leading electrode, a solid wire is used that provides deep penetration and generates a very small amount of slag, or a flux cored wire is used that contains 2.5 wt% or less of a slag former (hereafter, also referred to as "slag-forming material") relative to the total weight of the wire. As described in Fig. 5, the flux cored wire desirably contains no slag former, or has a maximum slag former ratio of 2.5% relative to the weight of the wire, more preferably 1.5% or less. For example, when the weight ratio of the flux to the wire is 25.0%, and the slag former weight ratio in the flux is 10.0%, the weight ratio of the slag former to the wire is 2.5%.

In order to reduce the thickness of the molten pool 36 immediately below an arc, a strong arc force is necessary. Addition of a slag former to the welding wire 23 weakens the arc force to weaken the effect of reducing the thickness of the molten pool 36 immediately below an arc, and also causes generation of slag 35. For this reason, the welding wire 23A of the leading electrode, which considerably affects porosity defects in horizontal fillet welding, is desirably the above-described welding wire 23 having a lower slag-former content.

In the welding wire 23A of the leading electrode, the composition of the solid wire, the composition of the hoop (outer circumferential steel band) of the flux cored wire, and the flux component other than the slag former may be selected from those used for common welding wires. For example, such materials may be adjusted in accordance with mechanical properties required for the weld zone, such as strength or toughness; in the solid wire, an alloy element such as C, Si, Mn, S, T, Mo, or Al is added in a necessary amount. For the hoop of the flux cored wire, mild steel is often used. On the other hand, to the flux, in addition to the slag former, an unoxidized simple substance such as C, Si, Mn, Ti, Mo, Al, K, Na, Ca, or F, or a binder substance is added.

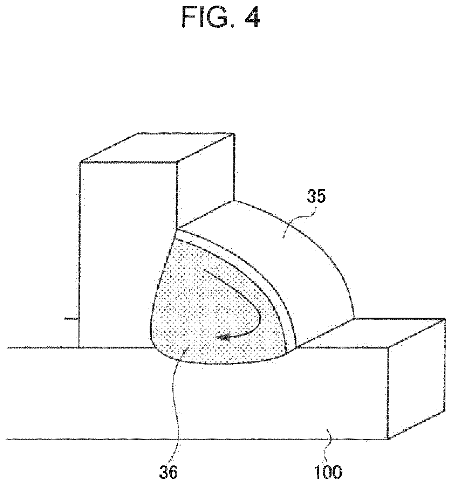

In horizontal fillet welding, the low slag-former content welding wire 23A of the leading electrode does not have the effect of improving the shape of the bead due to the slag 35, which results in a bead having a very poor shape. Thus, the welding wire 23B of the trailing electrode (welding wire 23B of the trailing second welding torch 21B) is prepared so as to contain a large amount of a slag former serving as the source of slag, to form a solidified slag layer 35, on the molten pool 36, downstream of an arc (in a direction opposite to the welding direction) where the molten pool 36 starts to solidify. This enables prevention of sagging of the molten pool 36, to correct the shape of the bead (refer to Fig. 4).

In order for the welding wire 23A of the leading electrode, which contains no slag former or has a low slag-former content, to provide, together with the welding wire 23B of the trailing electrode, an appropriate slag amount, the welding wire 23B of the trailing electrode needs to be prepared so as to have a large amount of slag former.

When the welding wire 23B of the trailing electrode is prepared so as to have a high slag-former content and is used to form a solidified slag layer, the trailing electrode alone may be used for vertical welding in which gravity considerably affects the molten pool 36, to thereby prevent sagging of the bead, which is advantageous. Incidentally, in vertical welding, the molten pool 36 sags in the vertical direction, and the molten pool 36 and the slag 35 do not accumulate immediately below the arc, so that a large amount of slag seldom results in generation of porosity defects due to primer-vaporized gas, and does not cause problems.

Incidentally, for convenience, vertical welding will be described also with the terms "leading electrode" and "trailing electrode" corresponding to the welding wires 23 of the welding torches 21.

In vertical welding, the molten pool 36 is considerably affected by gravity and is highly likely to sag, so that the molten pool 36 needs to be supported by the solidified slag layer 35. Thus, the slag 35 needs to have a higher melting point than the molten pool 36 and a lower density than the molten pool 36 in order to float over the molten pool 36, and is formed of oxide, in general. When the slag-former (serving as the source of slag) content relative to the weight of the wire is less than 3.0%, the slag 35 cannot cover the surface of the molten pool 36, or the slag 35 covering the surface is so thin and fragile that it cannot prevent the molten pool 36 from sagging. The slag-former content relative to the weight of the wire is preferably 3.0 wt% or more, more preferably 4.5 wt% or more.

On the other hand, when the slag-former content is more than 18.0 wt%, the slag-source content is so high that slag cannot entirely float up and remains within the molten pool 36, which tends to cause slag inclusion defects. For this reason, the slag-former content needs to be set to 3.0 to 18.0 wt%, more preferably in the range of 4.5 to 15.0 wt% (refer to Fig. 5).

Incidentally, the slag former that is most commonly used is Ti oxide. In addition, Zr oxide, Si oxide, and Mn oxide can also be used as slag formers. The flux cored wire has a structure constituted by a peripheral (in section) steel portion referred to as a hoop or a sheath, and a central (in section) flux portion. The slag former cannot be added to the steel portion, and is added to the flux portion.

For example, when the weight ratio of the flux to the wire is 10 wt%, and the weight ratio of the slag former in the flux is 30 wt%, the weight ratio of the slag former to the wire is 3.0%. Alternatively, when the weight ratio of the flux to the wire is 30.0 wt%, and the weight ratio of the slag former in the flux is 60.0 wt%, the weight ratio of the slag former to the wire is 18.0 wt%.

In the welding wire 23B of the trailing electrode, the hoop of the flux cored wire and the flux component other than the slag former are freely constituted by materials for commonly used welding wires, which can be adjusted in accordance with, for example, mechanical properties required for the weld zone, such as strength or toughness. For the hoop, mild steel is often used. On the other hand, to the flux, in addition to the slag former, an unoxidized simple substance such as C, Si, Mn, Ti, Mo, Al, K, Na, CA, or F, or a binder substance is added.

The welding wire 23A of the first welding torch 21A preferably has a diameter of 1.4 to 2.0 mm, and the welding wire 23B of the second welding torch 21B preferably has a diameter of 1.2 mm.

When a primer steel plate is subjected to horizontal fillet welding, a reduction in the thickness of the molten pool 36 immediately below the arc requires a strong arc force. Thus, the welding wire 23A of the leading electrode desirably has a large wire diameter. A wire diameter of 1.4 mm or more is effective to prevent porosity defects. However, a wire diameter of more than 2.0 mm, which provides an advantage of a stronger arc force, causes the welding wire 23 to have such high stiffness that the wire feed resistance becomes high and the feeding may be inhibited. For this reason, the upper limit of the wire diameter is set to 2.0 mm.

In vertical welding, the welding current cannot be set higher than and needs to be set lower than that in horizontal fillet position. The stability of an arc at low current increases as the wire diameter decreases. The optimal diameter of the welding wire 23B of the trailing electrode is 1.2 mm. A diameter of more than 1.2 mm causes the arc 31 less stable, and results in generation of a large amount of large spatters 32. On the other hand, when the welding wire 23B has a diameter less than 1.2 mm, the welding efficiency degrades in both of horizontal fillet welding and vertical welding.

For this reason, the welding wire 23B of the trailing electrode is desirably set to have a wire diameter smaller than the wire diameter of the welding wire 23A of the leading electrode; more desirably, vertical welding is performed with the welding wire 23B of the trailing electrode.

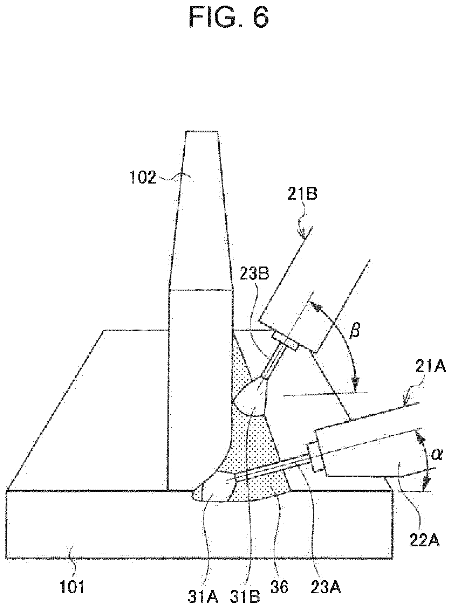

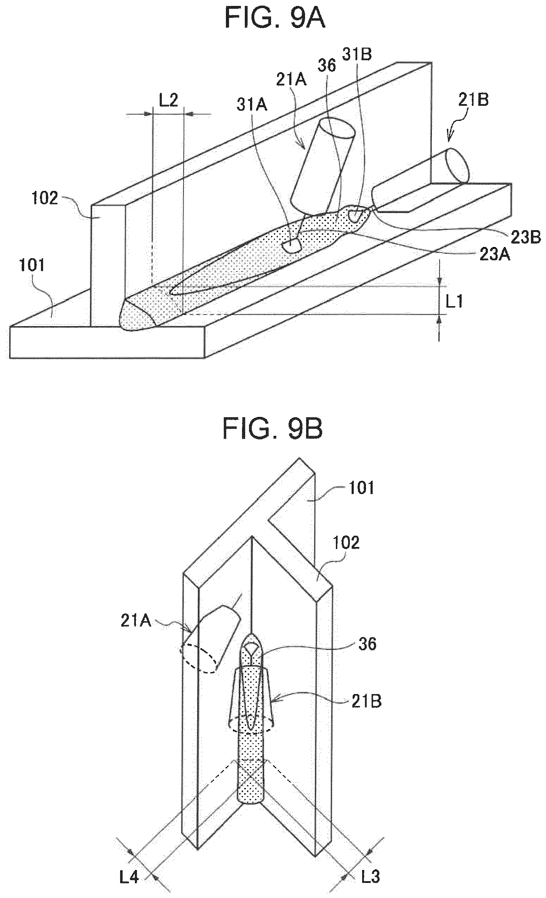

In horizontal fillet welding, the above-described deep penetration is achieved not only by the composition of the welding wire 23A alone, but also by setting a high welding current and a small arc length. The form of an arc struck under such current and voltage conditions is referred to as, in general, a buried arc; and an arc 31A is struck at a position deeper than the surface of the parent steel plate serving as the welding target 100. When a buried arc is struck, spatters 32 unavoidably generated due to the instability of the arc do not scatter, but the spatters 32 directly enter the molten pool 36 formed around the buried space. This results in a decrease in the amount of spatters 32. In addition, when the arc 31A of the welding torch 21A of the leading electrode is struck as a buried arc, this is also advantageous in a reduction of the thickness of the molten pool 36 immediately below the arc. As illustrated in Fig. 6, in the case of horizontal fillet welding in which a vertical plate 102 is welded to a horizontally placed lower plate 101, when the arc force is concentrated on the vertical plate 102 in which the weld zone is an end surface of the vertical plate 102, the end portion, which has a small heat capacity and easily reaches a higher temperature, is easily melted and a buried arc tends to be struck. Thus, a torch angle α of the welding torch 21A of the leading electrode is preferably set so as to provide a state close to the horizontal state as much as possible. When the torch angle α is less than 20°, the shielding nozzle 22A interferes with the lower plate 101, which makes it physically difficult to perform movement with stability. In addition, the shape of the bead tends to have unequal leg lengths (refer to Fig. 9A).

On the other hand, when the welding torch 21A of the leading electrode is set at a torch angle α of more than 40°, arc heat, which is distributed to the end portion of the vertical plate 102, is also distributed in a large amount to the lower plate 101 having a large heat capacity. This makes it difficult to strike a buried arc with stability, and the number of porosity defects tends to increase. Thus, the welding torch 21A of the leading electrode is desirably set at a torch angle α of 20° to 40°.

The arc 31B of the welding torch 21B of the trailing electrode does not have the role of discharging primer decomposition gas, but corrects the shape of the bead. Since the welding torch 21A of the leading electrode is set at a torch angle α of 20° to 40°, the molten pool 36 is formed in a distribution localized on the vertical-plate-102 side. Thus, when the welding torch 21B of the trailing electrode is set at a torch angle β of less than 42°, the distribution localized on the vertical-plate-102 side is not corrected, and the molten pool 36 remains in the distribution localized on the vertical-plate-102 side. When the welding torch 21B of the trailing electrode is set at a torch angle β of 42° or more, as illustrated in Fig. 9A, a bead can be formed that is highly balanced in terms of a vertical leg length L1 and a horizontal leg length L2. However, when the welding torch 21B of the trailing electrode is set at a torch angle β of more than 60°, the bead is formed in a distribution localized on the lower-plate-101 side. Thus, the welding torch 21B of the trailing electrode is preferably set at a torch angle β of 42° to 60°.

Since the shielding nozzle 22, which is positioned outermost of the welding torch 21, has a large diameter, setting a small torch angle tends to cause the shielding nozzle 22 to come into contact with the lower plate 101. When the leading welding torch 21A is set at a torch angle α of less than 20°, in order to prevent interference between the shielding nozzle 22A and the lower plate 101, the shielding nozzle 22A is desirably provided so as to have a diameter as small as possible. However, when such a shielding nozzle 22A having a small diameter is used for welding for a long time, spatters 32 generated may cause clogging and blockage of the tip of the shielding nozzle 22A, which may result in insufficient shielding.

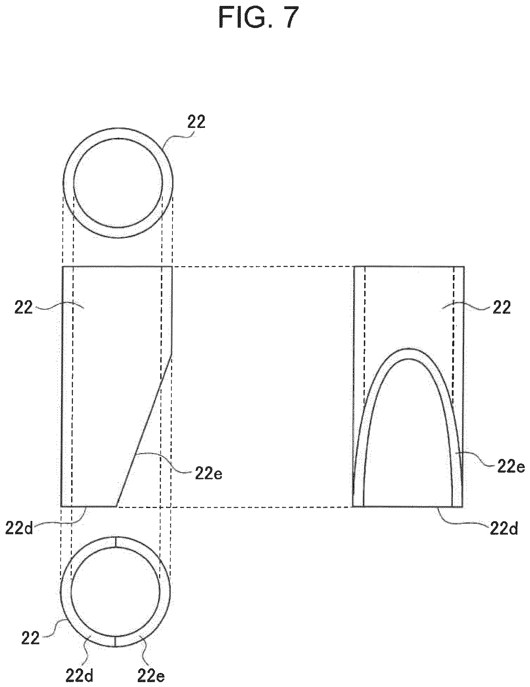

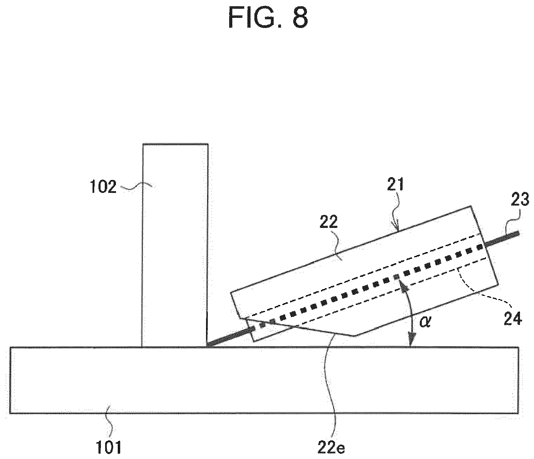

Thus, as illustrated in Fig. 7 and Fig. 8, in the shielding nozzle 22 that has a common cylindrical shape or a slightly tapered cylindrical shape, a tip-22d-side portion may be obliquely cut, and a cut surface 22e may be disposed so as to face the lower plate 101. This ensures a large opening, and prevents interference with the lower plate 101, which enables stable welding.

In order to weld a primer steel plate without generating porosity defects, the following is effective: a strong arc force is concentrated to provide a buried arc to achieve a reduction in the thickness of the molten pool 36 immediately below the arc 31A of the leading electrode, to smoothly discharge the primer-vaporized gas 37. In order to provide a buried arc, in addition to the above-described type, composition, and wire diameter of the welding wire 23 and the torch angle α, it is also important to appropriately set and control current and voltage. The higher the current, the stronger the resultant arc force; a current of 380 A or more tends to provide a buried arc. The upper limit of the current is not particularly defined; however, in general, the capacity of the welding power supply practically defines the upper limit.

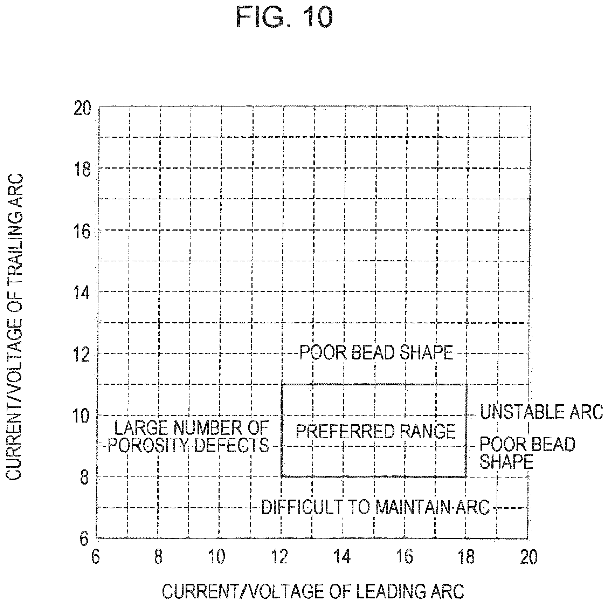

Fig. 10 is a graph of a relationship between, in horizontal fillet welding, a current/voltage ratio of an arc of a leading electrode and a current/voltage ratio of an arc of a trailing electrode. At a constant current, high voltages do not provide a buried arc; as the voltage decreases, the arc 31 concentrates and stabilizes as a buried arc. In the leading electrode, a current/voltage ratio of 12.0 or more provides a buried arc. However, at a current/voltage ratio of more than 18.0, the arc 31 cannot be maintained, and a short circuit occurs between the tip of the welding wire 23 and the welding target 100, which makes it difficult to perform welding. Thus, the current/voltage ratio of the leading electrode is preferably in the range of 12.0 to 18.0.

The role of the trailing electrode is to insert the welding wire 23 in an amount required to compensate for the insufficient cross section of the weld metal, and is also to correct a convex bead shape formed due to the buried arc of the leading electrode so as to become a flat and conforming shape. A buried arc having a small arc length does not provide a wide molten pool 36, and correction of the bead shape cannot be achieved. The larger the arc length, the stronger the effect of correcting the shape; this means, at a constant current, a high voltage is applied. As described in Fig. 10, when the trailing electrode has a current/voltage of more than 11.0, the bead shape cannot be corrected; for this reason, the current/voltage is desirably set to 11.0 or less. However, when the current/voltage is less than 8.0, the arc 31 cannot be maintained, and a bead cannot be formed with stability. Thus, the trailing electrode is desirably set to have a current/voltage of 8.0 to 11.0.

Thus, in this embodiment, in horizontal fillet welding, the plurality of welding wires 23A and 23B having different functions are used in combination such that welding is performed with the arcs 31 struck from both of the welding wire 23A of the leading electrode and the welding wire 23B of the trailing electrode, which enables high-efficiency defect-free welding.

In vertical welding, arc welding is performed with a single electrode that is the welding wire 23B (of the trailing electrode) containing a large amount of slag former, to thereby appropriately suppress the volume of the molten pool 36, and to prevent sagging of the molten pool 36.

In this way, vertical welding is performed with a single welding torch 21B using the welding wire 23B having a high slag-former content, so that, compared with the thickness of slag formed during horizontal fillet welding in Fig. 9A, slag having a large thickness can be formed during vertical welding in Fig. 9B. Thus, use of the single welding system 10 enables horizontal fillet welding and vertical welding performed efficiently under individually appropriate conditions.

When an arc is struck only from the welding torch 21B of the trailing electrode to perform vertical welding, the welding torch 21A of the leading electrode may be a physical obstacle. Thus, as illustrated in Fig. 11 or Fig. 12 described above, during vertical welding, the welding torch 21A of the leading electrode not being used is turned or retracted backward; and, during horizontal fillet welding, the welding torch 21A of the leading electrode is turned in the opposite direction or moved forward to the original position. In this way, the single welding system 10 is used to efficiently perform horizontal fillet welding and vertical welding.

As has been described, in the gas-shielded arc welding system 10 according to this embodiment, the plurality of welding torches 21 disposed in a welding apparatus so as to be three-dimensionally movable include the welding wires 23 different from each other in terms of composition and diameter; in the case of horizontal fillet welding, at least two welding torches 21 are used to feed the welding wires 23 and to strike the arcs 31 to form a bead; and, in the case of vertical welding, the welding wire 23B of the trailing electrode is fed and the arc 31 is struck to form a bead. This enables high-quality, high-efficiency, and continuous welding in any position of the horizontal position and the vertical position.

In the gas-shielded arc welding method according to this embodiment, in the case of horizontal fillet welding, in the welding wire 23A of the leading electrode, a current of 380 A or more is applied and the current/voltage is adjusted to 12.0 or more and 18.0 or less in order to strike the arc 31A as a buried arc, while the current and voltage applied to the welding wire 23B of the trailing electrode are adjusted to a current/voltage of 8.0 or more and 11.0 or less in order not to strike a buried arc. Thus, the strong arc force of the buried arc of the leading welding torch 21A enables smooth discharging of the vaporized gas 37 from the molten pool 36. Furthermore, the arc 31B of the trailing welding torch 21B having a large arc length and not being a buried arc enables stable correction of a convex bead shape due to the buried arc, to thereby form a bead having a good appearance.

In the two welding torches 21A and 21B used for horizontal welding, the leading welding wire 23A is a solid wire or a flux cored wire containing 2.5 wt% or less of a slag former relative to the total weight of the wire. This enables suppression of generation of the slag 35, and effective discharging of the vaporized gas 37 out of the molten pool 36, to prevent generation of porosity defects.

Furthermore, the welding wire 23A of the leading welding torch 21A has a diameter of 1.4 to 2.0 mm, so that a strong arc force is generated to achieve a reduction in the thickness of the molten pool 36 immediately below the arc, to thereby prevent porosity defects during horizontal fillet welding.

Of the two welding torches 21A and 21B used for horizontal welding, in the trailing welding torch 21B, the welding wire 23B is a flux cored wire containing 3.0 to 18.0 wt% of a slag former relative to the total weight of the wire, and is used for vertical welding. Thus, the single welding system 10 enables high-quality, high-efficiency, and continuous welding in any position of the horizontal position and the vertical position.

Furthermore, in the two welding torches 21A and 21B used for horizontal welding, the leading welding wire 23A has a larger diameter than the trailing welding wire 23B, so that a strong arc force is generated in the leading welding wire 23A to achieve a reduction in the thickness of the molten pool 36 immediately below the arc, to thereby prevent porosity defects.

In the case of performing horizontal fillet welding, the leading welding torch 21A is set at a torch angle α of 20° to 40° relative to the lower plate 101, and the trailing welding torch 21B is set at a torch angle β of 42° to 60° relative to the lower plate 101. This provides, as the arc 31A of the leading welding torch 21A, a buried arc to prevent porosity defects, and enables formation of a bead highly balanced in terms of vertical leg length L1 and horizontal leg length L2.

In the two welding torches 21A and 21B for performing horizontal fillet welding, the shielding nozzle 22A of the leading welding torch 21A is formed by obliquely cutting a portion of the cylindrical tip 22d, and the cut surface 22e is disposed so as to face the lower plate 101 during horizontal fillet welding. Thus, even at a small torch angle, a large opening is ensured, and interference with the lower plate 101 is prevented, which enables welding with stability.

The welding wire 23B used for vertical welding is a flux cored wire containing 3.0 to 18.0 wt% of a slag former relative to the total weight of the wire. Thus, the solidified slag layer 35 is formed to prevent sagging of the molten pool 36 due to gravity, to thereby enable vertical welding with stability.

Furthermore, the welding wire 23B used for vertical welding has a diameter of 1.2 mm, to thereby provide high stability of an arc at low current, to thereby prevent an excessively large volume of the molten pool 36.

The welding torch 21A not being used during vertical welding is movable forward and backward in the feeding direction of the welding wire 23A. Thus, during vertical welding, the welding torch 21A not being used does not hamper vertical welding.

The welding torch 21A not being used during vertical welding is turnable relative to the weld line. Thus, during vertical welding, the welding torch 21A not being used does not hamper vertical welding.

Incidentally, the present invention is not limited to the above-described embodiments, and these embodiments can be appropriately modified or improved, for example.

The number of welding torches 21 of the torch system 20 is not limited in terms of the upper limit. From the viewpoint of usability, in general, two torches (two electrodes) are optimal. However, as described in modifications below, three torches (three electrodes) are also practically allowed.

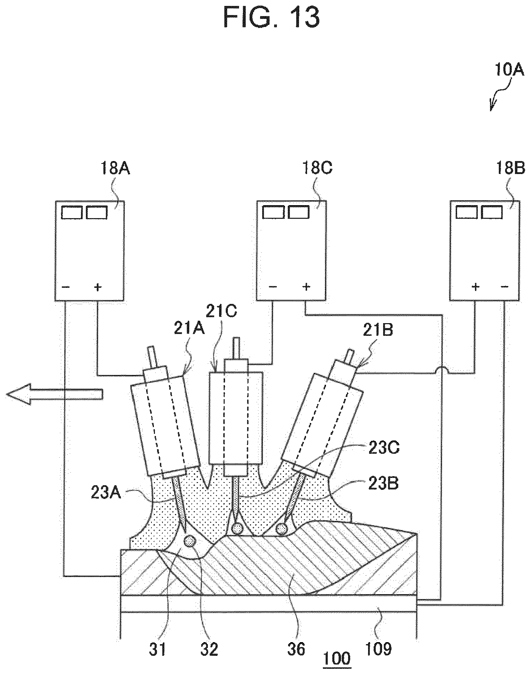

Fig. 13 to Fig. 17 illustrate the configurations of welding systems having three welding torches constituted by three electrodes. In Fig. 13, a welding system 10A according to a first modification is an all-arc-method welding system in which welding currents are individually supplied from welding power supply devices 18A, 18B, and 18C to three electrodes that are welding wires 23 (a welding wire 23A of a leading electrode, a welding wire 23C of an intermediate electrode, and a welding wire 23B of a trailing electrode), to strike arcs 31 between a welding target 100 and the three welding wires 23A, 23B, and 23C to perform welding.

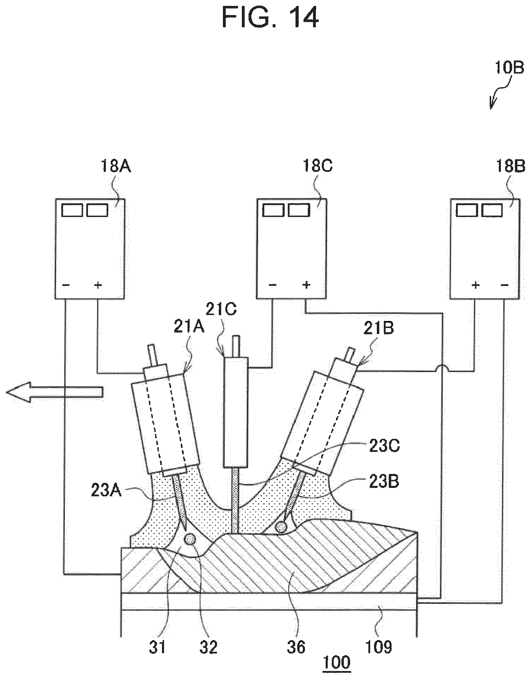

In Fig. 14, a welding system 10B according to a second modification employs, what is called, a resistance heating method in which welding currents are individually supplied from welding power supply devices 18A and 18B to a welding wire 23A of a leading electrode and a welding wire 23C of a trailing electrode, to strike arcs 31 between a welding target 100 and the welding wires 23A and 23B; a constant current is supplied from a welding power supply device 18C, to the welding target 100, through a welding wire 23C (of an intermediate electrode) being fed, so that, without striking of an arc, heat generated due to the electric resistance of the welding wire 23B and heat conduction from a molten pool 36 are used to melt the welding wire 23B to achieve welding.

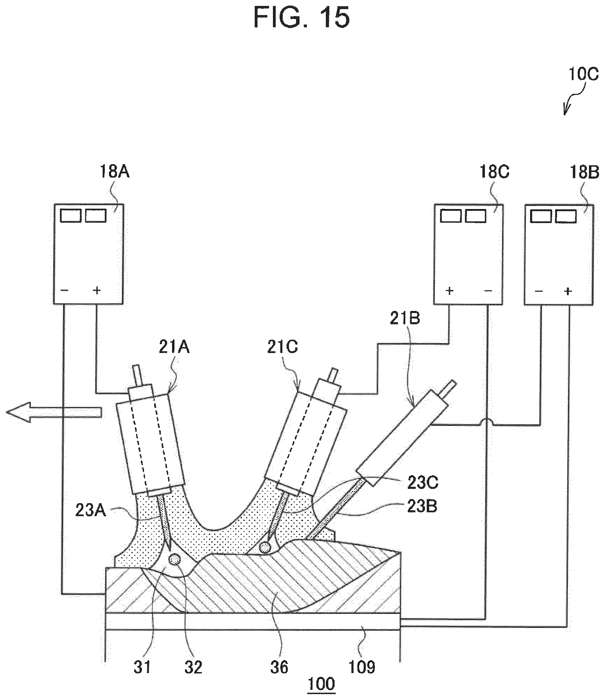

In Fig. 15, a welding system 10C according to a third modification is a welding system employing a resistance heating method in which welding currents are individually supplied from welding power supply devices 18A and 18C to a welding wire 23A of a leading electrode and a welding wire 23C of an intermediate electrode, to strike arcs 31 between a welding target 100 and the welding wires 23A and 23C; and, a constant current is supplied from a welding power supply device 18B to a welding wire 23B (of a trailing electrode) being fed.

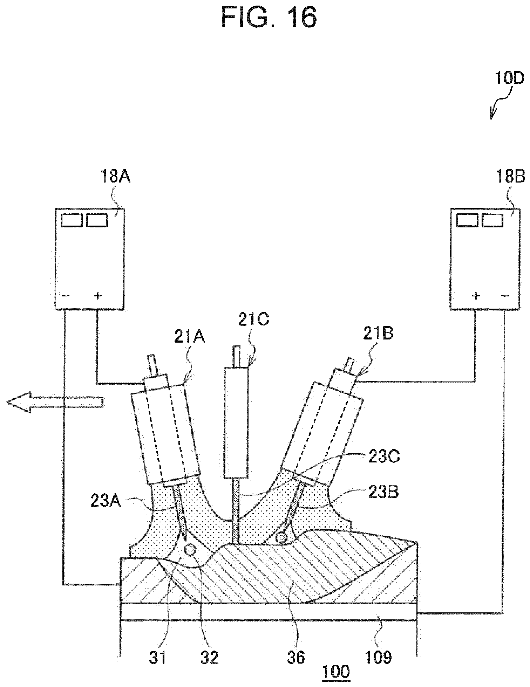

In Fig. 16, a welding system 10D according to a fourth modification is a welding system employing, what is called, a heat conduction method in which welding currents are individually supplied from welding power supply devices 18A and 18C to a welding wire 23A of a leading electrode and a welding wire 23B of a trailing electrode, to strike arcs 31 between a welding target 100 and the welding wires 23A and 23B; a welding wire 23C is only fed without supply of a current, and only heat conduction from a molten pool 36 is used to melt the welding wire 23C to perform welding. Welding systems employing the arc striking method or the resistance heating method require a welding power supply device 18; however, the welding system employing the heat conduction method does not require a welding power supply device 18.

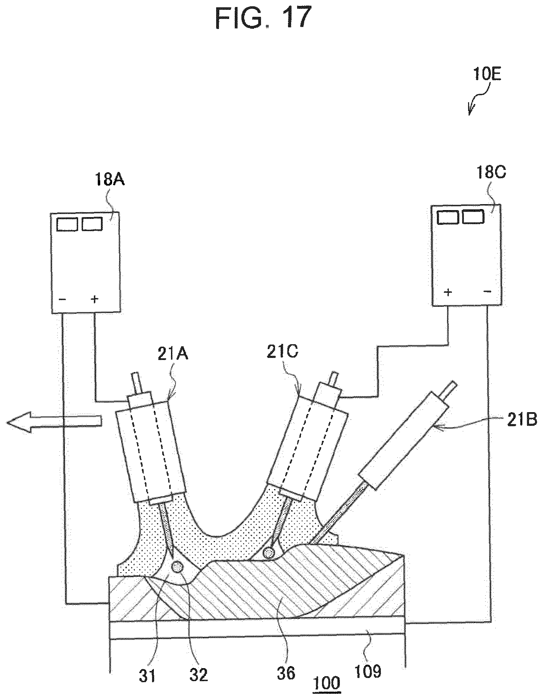

In Fig. 17, a welding system 10E according to a fifth modification is a welding system employing a heat conduction method in which arcs 31 are struck between a welding target 100 and a welding wire 23A of a leading electrode and a welding wire 23C of an intermediate electrode; and a welding wire 23B of a trailing electrode is melted only by heat conduction from a molten pool 36.

Incidentally, in a three-electrode system, the arc striking method achieves melting of the welding wire 23 at the fastest speed and is efficient; the second fastest melting speed is provided by the resistance heating method, and the slowest melting speed is provided by the heat conduction method.

As described above, when the welding systems 10A to 10E illustrated in Fig. 13 to Fig. 17 and including three welding torches 21 are used to perform horizontal fillet welding, the remaining welding torch 21 other than two welding torches 21 striking arcs is used to melt a steel plate by means of an arc, resistance heating, or heat conduction. Thus, an optimal welding system 10 can be selected in accordance with welding conditions such as the welding target 100, the weld zone, the welding strength, or the bead shape.

In a three-electrode system, when the welding torch 21B of the trailing electrode serves as a resistance-heating electrode or a heat-conduction electrode, and the welding torch 21C of the intermediate electrode strikes an arc (refer to Fig. 15 and Fig. 17), the welding torch 21C of the intermediate electrode is a trailing welding torch according to the present invention.

### EXAMPLES

For demonstration of advantages provided by the present invention, Examples of welding systems according to the present invention and Comparative Examples for comparison with the Examples will be described. In each of Examples and Comparative Examples, a common carbon steel plate having a thickness of 12 mm and coated with a primer at a film thickness of 30 µm was used; and horizontal fillet welding and vertical welding were performed with the same welding system.

The torch systems used were one- to three-electrode systems, and mounted on the tip of a six-axis joint welding robot (manipulator). In addition to the six-axis joints, a mechanism of turning only the welding torch of the leading electrode was disposed and used during the vertical welding. In the horizontal-position welding, the welding speed was set to 800 mm/min, and the target leg lengths L1 and L2 (refer to Fig. 9A) of a welding bead were set to 6 to 7 mm. In the vertical-position welding, the welding speed was set to 150 mm/min, and the leg lengths L3 and L4 (refer to Fig. 9B) of a welding bead were adjusted to be 7 to 8 mm.

The welding wires used were appropriate combinations of a solid wire and a flux cored wire. The solid wire had a composition according to JIS Z3312 YGW11, which is commonly and widely distributed for carbon steel. The flux cored wire used was a wire employing, as a slag former, a mineral containing titanium oxide as a main component and commonly referred to as rutile. The hoop was composed of a mild steel material in which intentionally no alloy components were added. In addition to the slag former, alloys of C, Si, Mn, and Al were added in amounts so as to correspond to JIS Z3313 T49J0T1-1CA-U, which is commonly and widely distributed for carbon steel, and a K compound was added as an arc stabilizing substance. The shielding gas used for welding was 100% CO₂. The power supplies used for striking arcs were of a direct-current constant-voltage control system. On the other hand, the power supplies used for resistance heating in parts of three-electrode systems were of a direct-current constant-current control system.

Samples provided by welding under the above-described conditions were evaluated: the surfaces of the beads were ground to a depth of 3 mm, and blow holes within the weld metals were counted; and the numbers of blow holes per 200 mm were compared. Incidentally, samples having 75 or less blow holes were evaluated as having passed; samples having 10 to 50 blow holes were evaluated as good; and samples having less than 10 blow holes were evaluated as very good. For bead shapes, samples having very good appearances were evaluated as O, samples having acceptable appearances were evaluated as Δ, and samples having poor appearances were evaluated as ×. Results of another evaluation item were also recorded in terms of defects such as slag inclusion defects and bead sagging.

The evaluation results of Examples together with the welding conditions are described in Table 1. Evaluation results of Comparative Examples together with the welding conditions are described in Table 2. Incidentally, the welding conditions of intermediate electrodes in welding using three-electrode systems in Comparative Examples and Examples are described in, another table, Table 3.

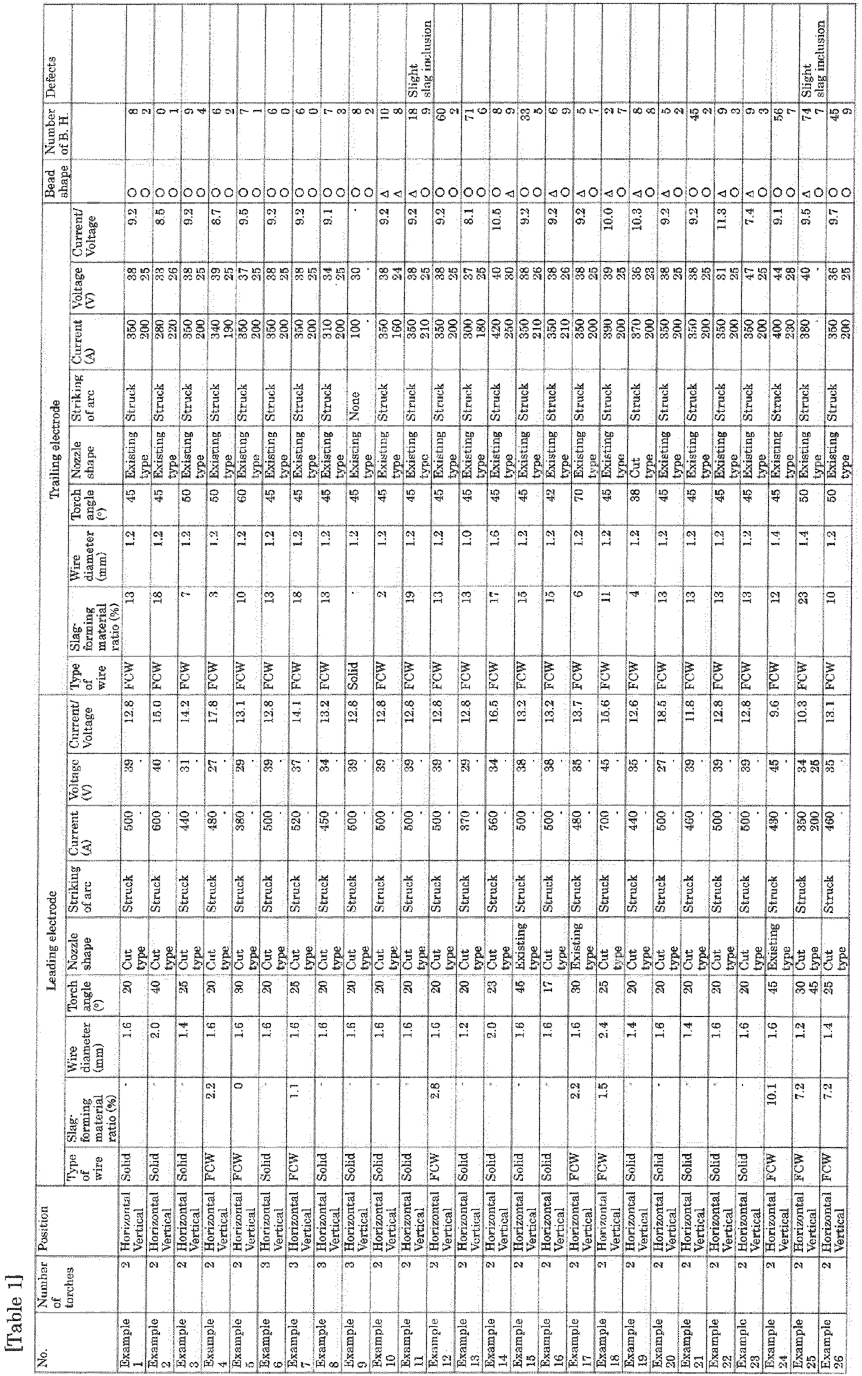

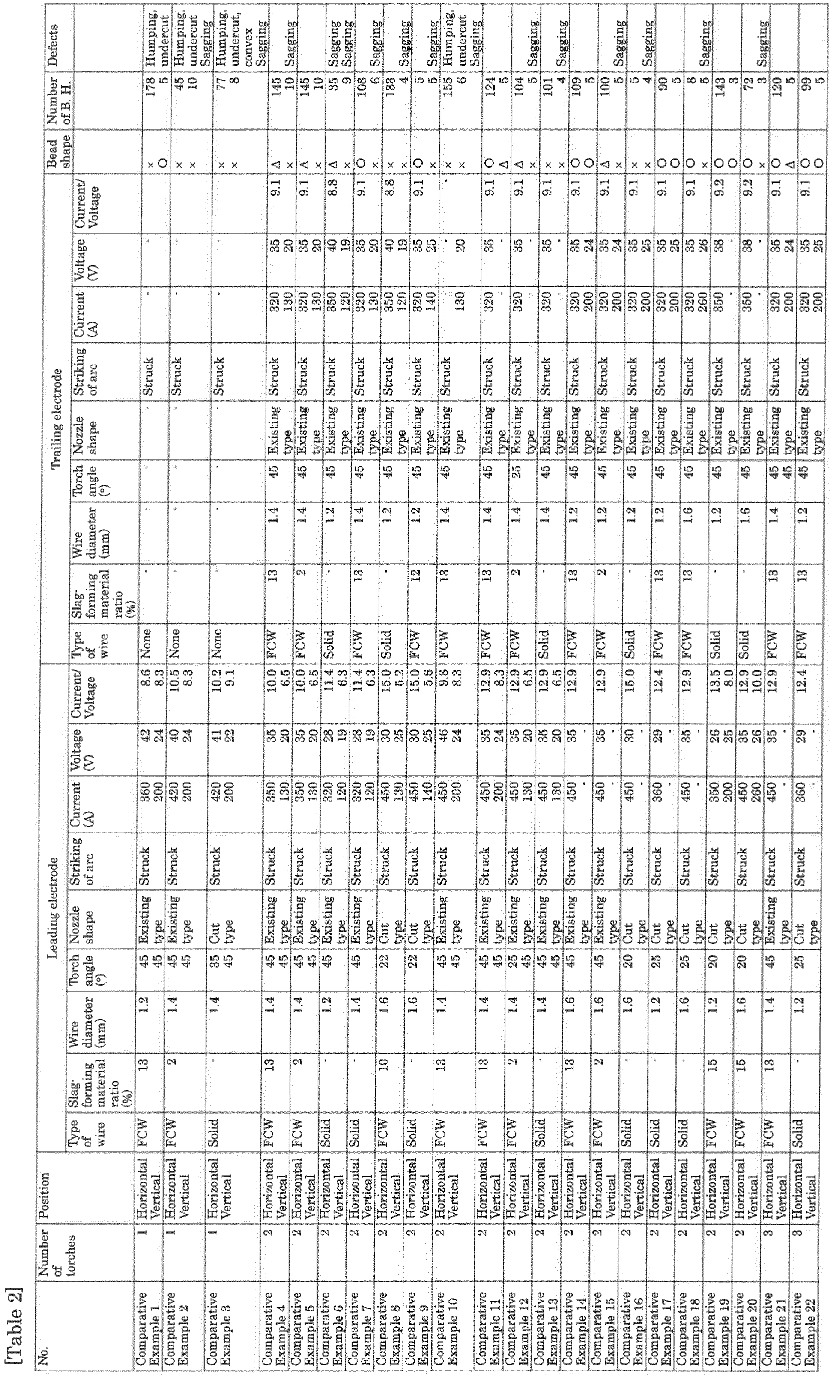

**[Table 3]**

| No. | Position | Intermediate electrode | | | | | | | | |
|---|---|---|---|---|---|---|---|---|---|---|
| | | Type of wire | Slag-forming material ratio (%) | Wire diameter (mm) | Torch angle (°) | Nozzle shape | Striking of arc | Current (A) | Voltage (V) | Current/ Voltage (only arc electrodes) |
| Example 6 | Horizontal | Solid | - | 1.2 | 45 | None | None | 90 | 30 | - |
| | Vertical | | | | | | | - | - | |
| Example 7 | Horizontal | FCW | 10 | 1.2 | 45 | None | None | 0 | 0 | - |
| | Vertical | | | | | | | - | - | |
| Example 8 | Horizontal | FCW | 0 | 1.2 | 40 | Existing type | Struck | 180 | 21 | 8.6 |
| | Vertical | | | | | | | - | - | |
| Example 9 | Horizontal | FCW | 10 | 1.2 | 45 | Existing type | Struck | 350 | 37 | 9.5 |
| | Vertical | | | | | | | 200 | 25 | |
| Comparative Example 21 | Horizontal | Solid | - | 1.2 | 45 | None | None | 90 | 30 | - |
| | Vertical | | | | | | | - | - | |
| Comparative Example 22 | Horizontal | FCW | 0 | 0.9 | 45 | None | None | 0 | 0 | - |
| | Vertical | | | | | | | - | - | |

In Table 1, Examples 1 to 5 and 10 to 26 correspond to two-electrode arc welding (refer to Fig. 2) in which, in horizontal fillet welding, arcs are struck from a leading electrode and a trailing electrode. Of these, in Example 25, the leading electrode alone is used for vertical welding. In Examples 1 to 5, 10 to 24, and 26, the trailing electrode alone is used for vertical welding.

In Table 1 and Table 3, Examples 6 to 9 employ three-electrode systems. Of these, in Example 6, horizontal fillet welding is performed such that a leading electrode and a trailing electrode are used to strike arcs, and an intermediate electrode is used as a resistance-heating electrode (refer to Fig. 6), whereas vertical welding is performed with the trailing electrode alone. In Example 7, horizontal fillet welding is performed such that a leading electrode and a trailing electrode are used to strike arcs, and an intermediate electrode is used as a heat-conduction electrode (refer to Fig. 8), whereas vertical welding is performed with the trailing electrode alone. In Example 8, horizontal fillet welding is performed such that a leading electrode, an intermediate electrode, and a trailing electrode are all used to strike arcs (refer to Fig. 5), whereas vertical welding is performed with the trailing electrode alone. In Example 9, a leading electrode and an intermediate electrode are used to strike arcs, and a trailing electrode is used as a resistance-heating electrode (refer to Fig. 7), whereas vertical welding is performed with the intermediate electrode alone.

In each of Examples 1 to 26, the welding wires of the leading electrode and the trailing electrode are provided so as to be different from each other in terms of composition and diameter. As a result, as described in Table 1, Examples 1 to 26 according to the present invention enable welding that provides bead shapes and defect resistance (number of porosity defects) evaluated as having passed, and that provides high operability.

In particular, in the two-electrode systems of Examples 1 to 5, as the leading electrode, provided is a solid wire, or a flux cored wire containing 2.5 wt% or less of a slag former relative to the total weight of the wire, the wires having a wire diameter of 1.4 to 2.0 mm. As the trailing electrode, provided is a flux cored wire containing 3.0 to 18.0 wt% of a slag former relative to the total weight of the wire, and having a wire diameter of 1.2 mm.

The leading electrode is set to have a torch angle of 20° to 40° relative to a lower plate, whereas the trailing electrode is set to have a torch angle of 42° to 60° relative to the lower plate. Incidentally, regarding the shape of the shielding nozzle, in Examples 1 to 5, the leading electrode is provided with the shape of cut type illustrated in Fig. 7 and having a cut surface 22e at the tip, whereas the trailing electrode is provided with the shape of existing cylindrical type not having the cut surface at the tip. Thus, in setting the torch angles, the leading electrode is preferably provided with the cut type and the trailing electrode is preferably provided with the existing type; however, this is not limiting.

In horizontal fillet welding, for each leading electrode, the welding current is set to 380 A or more, and the current/voltage is adjusted to be 12.0 or more and 18.0 or less; and the welding current and the welding voltage of the trailing electrode are adjusted such that the current/voltage is 8.0 or more and 11.0 or less.

In Examples 1 to 5, which each satisfy such conditions, horizontal fillet welding and vertical welding both provided very good bead outer shapes and caused a small number of porosity defects. Thus, very good results were provided.

In Examples 6 to 8, which employ three-electrode systems that satisfy the above-described conditions of the leading electrode and the trailing electrode of Examples 1 to 5, and that employ, as an intermediate electrode, a resistance-heating electrode, a heat-conduction electrode, or an arc-striking electrode, horizontal fillet welding and vertical welding both provided very good bead outer shapes and caused a small number of porosity defects. Thus, very good results were provided.

Example 9 employs a three-electrode system in which the trailing electrode is a resistance-heating electrode (refer to Fig. 7). The leading electrode and the intermediate electrode of this Example respectively satisfy the above-described conditions of the leading electrode and the trailing electrode of Examples 1 to 5. In this case, in vertical welding, the intermediate electrode provides good results in terms of the bead shape and the number of porosity defects. Horizontal fillet welding also provided very good results: arcs were struck from the leading electrode and the intermediate electrode, and the trailing electrode was subjected to resistance heating to melt and add the wire, to thereby achieve high-speed welding; the bead outer shape was very good, and the number of porosity defects was small.

Example 10 and Example 11 satisfy the above-described conditions of the leading electrode and the trailing electrode in Examples 1 to 5 except for the slag-forming material ratio of the flux cored wire of the trailing electrode. In Example 10, during vertical welding, the amount of slag generated was slightly insufficient, so that the bead shape on the acceptable level was provided. In addition, during horizontal fillet welding, the amount of slag generated was small in the trailing electrode, so that the bead shape on the acceptable level was provided. In Example 11, during vertical welding, the flux cored wire serving as the trailing electrode and having a high slag-forming material ratio caused formation of slag, so that the bead shape was good. However, during horizontal fillet welding, a large amount of slag was generated from the trailing electrode, so that the bead shape on the acceptable level was provided, and slag inclusion was slightly observed.

Example 12 satisfies the above-described conditions of the leading electrode and the trailing electrode in Examples 1 to 5 except for the slag-forming material ratio of the flux cored wire serving as the leading electrode. In this case, in vertical welding, the flux cored wire containing an appropriate amount of slag former and serving as the trailing electrode provided good results in terms of the bead shape and porosity defects. On the other hand, in horizontal fillet welding, a large amount of slag was generated from the leading electrode, so that relatively many porosity defects were observed.

In Example 13, the wire diameter and the welding current of the leading electrode and the wire diameter of the trailing electrode are different from the above-described conditions of the leading electrode and the trailing electrode in Examples 1 to 5. In this case, in vertical welding, the wire diameter is slightly small, but good results were provided in terms of the bead shape and porosity defects. However, in horizontal fillet welding, the wire diameter of the leading electrode was excessively small, and the current was low, so that relatively many porosity defects were observed.

In Example 14, the wire diameter of the trailing electrode is different from the above-described conditions of the leading electrode and the trailing electrode in Examples 1 to 5. In this case, in vertical welding, the trailing electrode has a large wire diameter, so that the arc tends to be unstable, and the heat input increases, which results in a slightly poorer bead shape. On the other hand, in horizontal fillet welding, good results are provided in terms of the bead shape and porosity defects.

In Example 15, the leading electrode has a shielding nozzle having the shape of existing cylindrical type, and the torch angle is different from the above-described conditions of the leading electrode and the trailing electrode in Examples 1 to 5. Thus, in vertical welding, the flux cored wire serving as the trailing electrode, having an appropriate diameter, and containing an appropriate amount of slag former provided good results in terms of the bead shape and porosity defects. On the other hand, in horizontal fillet welding, the leading electrode was set to have a large torch angle of 45°, so that a buried arc was not provided and relatively many porosity defects were observed.

In Example 16, the leading electrode has a shielding nozzle having the shape of cut type, but the torch angle is set to 17°, so that the torch angle of the leading electrode is different from the above-described conditions of the leading electrode and the trailing electrode in Examples 1 to 5. Thus, in vertical welding, the flux cored wire serving as the trailing electrode, containing an appropriate amount of slag former, and having an appropriate diameter provided good results in terms of the bead shape and porosity defects. On the other hand, in horizontal fillet welding, the leading electrode was set at a slightly small torch angle, so that the bead shape on the acceptable level was provided.

In Example 17, the torch angle of the trailing electrode is different from the above-described conditions of the leading electrode and the trailing electrode in Examples 1 to 5. Thus, in vertical welding, good results were provided; however, in horizontal fillet welding, the trailing electrode was set at a large torch angle, so that the bead shape was not sufficiently corrected, and the bead shape on the acceptable level was provided.

In Example 18, the wire diameter of the leading electrode is different from the above-described conditions of the leading electrode and the trailing electrode in Examples 1 to 5. Thus, in vertical welding, slag was appropriately formed, so that good results were provided in terms of the bead shape and porosity defects. On the other hand, in horizontal fillet welding, the leading electrode had a large wire diameter, and the arc force was strong, so that the bead shape on the acceptable level was provided.

In Example 19, the torch angle of the trailing electrode is different from the above-described conditions of the leading electrode and the trailing electrode in Examples 1 to 5. Thus, in vertical welding, the wire had an appropriate diameter and an appropriate slag former, so that good results are provided in terms of the bead shape and porosity defects. On the other hand, in horizontal fillet welding, the trailing electrode was set at a small torch angle, so that the bead shape on the acceptable level was provided.

In Example 20, the current/voltage of the leading electrode during horizontal fillet welding is different from the above-described conditions of the leading electrode and the trailing electrode in Examples 1 to 5. Thus, in vertical welding, good results were provided in terms of the bead shape and porosity defects. On the other hand, in horizontal fillet welding, the leading electrode was set to a large current/voltage, so that the bead shape on the acceptable level was provided.

Also in Example 21, the current/voltage of the leading electrode during horizontal fillet welding is different from the above-described conditions of the leading electrode and the trailing electrode in Examples 1 to 5. Thus, in vertical welding, good results were provided in terms of the bead shape and porosity defects. On the other hand, in horizontal fillet welding, the leading electrode was set to a low current/voltage, so that a buried arc was not sufficiently formed, and porosity defects were slightly generated.

In Example 22, the current/voltage of the trailing electrode during horizontal fillet welding is different from the above-described conditions of the leading electrode and the trailing electrode in Examples 1 to 5. Thus, in vertical welding, good results were provided in terms of the bead shape and porosity defects. On the other hand, in horizontal fillet welding, the trailing electrode was set to a high current/voltage, so that a buried arc tended to be formed, and the bead shape on the acceptable level was provided.

Also in Example 23, the current/voltage of the trailing electrode during horizontal fillet welding is different from the above-described conditions of the leading electrode and the trailing electrode in Examples 1 to 5. Thus, in vertical welding, good results were provided in terms of the bead shape and porosity defects. On the other hand, in horizontal fillet welding, the trailing electrode was set to a low current/voltage, so that the bead shape on the acceptable level was provided.

In Example 24, the slag-forming material ratio of the leading electrode, the torch angle of the leading electrode, the current/voltage of the leading electrode during horizontal fillet welding, and the wire diameter of the trailing electrode are different from the above-described conditions of the leading electrode and the trailing electrode in Examples 1 to 5. Thus, in vertical welding, the trailing electrode has a slightly large wire diameter, but good results were provided in terms of the bead shape and porosity defects. On the other hand, in horizontal fillet welding, a large amount of slag was formed from the leading electrode, and the current/voltage was low, so that a buried arc was not provided, and porosity defects were slightly observed.

In Example 25, the slag-forming material ratio of the leading electrode, the wire diameter of the leading electrode, the current and the current/voltage of the leading electrode during horizontal fillet welding, the slag-forming material ratio of the trailing electrode, and the wire diameter of the trailing electrode are different from the above-described conditions of the leading electrode and the trailing electrode in Examples 1 to 5. In this case, in vertical welding, good results were provided in terms of the bead shape and porosity defects. On the other hand, in horizontal fillet welding, the wires serving as the leading electrode and the trailing electrode had high slag-forming material ratios, so that a large amount of slag was generated, the bead shape on the acceptable level was provided, and slag inclusion was slightly observed.

In Example 26, the slag-forming material ratio of the leading electrode is different from the above-described conditions of the leading electrode and the trailing electrode in Examples 1 to 5. In this case, in vertical welding, good results were provided in terms of the bead shape and porosity defects. On the other hand, in horizontal fillet welding, the wire serving as the leading electrode has a high slag-forming material ratio, so that a large amount of slag was generated, and porosity defects were slightly observed.

Hereinafter, Comparative Examples in Table 2 will be described.

Comparative Example 1 employs a system using a commonly used single-electrode torch. Under high-speed conditions of a horizontal fillet welding speed of 800 mm/min, even with an increased current, the bead shape was not corrected, defects that are unique to high-speed conditions and referred to as undercut and humping were caused. In addition, porosity defects of the primer steel plate were not suppressed. Incidentally, use of a flux cored wire having a high slag-forming material ratio enabled sufficient vertical welding. Such results serve as grounds that horizontal fillet welding and vertical welding cannot be continuously performed.

Comparative Example 2 also employs a system using a commonly used single-electrode torch. Under high-speed conditions of a horizontal fillet welding speed of 800 mm/min, even with an increased current, the bead shape was not corrected, defects that are unique to high-speed welding and referred to as undercut and humping were caused. In addition, porosity defects of the primer steel plate were not suppressed. Incidentally, a flux cored wire containing a small amount of slag-forming material, which is considered as, in general, being suitable for horizontal fillet welding, was used; as a result, compared with Comparative Example 1, porosity defects are reduced, but high-speed welding is not sufficiently achieved. On the other hand, in vertical welding, the welding wire has a small amount of slag-forming material, and slag was not sufficiently formed, so that bead sagging occurred. Such results serve as grounds that horizontal fillet welding and vertical welding cannot be continuously performed.

Comparative Example 3 also employs a system using a commonly used single-electrode torch. Under high-speed conditions of a horizontal fillet welding speed of 800 mm/min, even with an increased current, the bead shape was not corrected, defects that are unique to high-speed welding and referred to as undercut and humping were caused. In addition, porosity defects of the primer steel plate were not suppressed. Incidentally, a solid wire was used, so that, compared with Comparative Example 1, porosity defects were reduced; however, high-speed welding was not achieved, and the number of porosity defects was not sufficiently small. The effect of improving the shape of a bead due to slag was not provided, and the bead had a convex shape. On the other hand, in vertical welding, the welding wire did not contain a slag-forming material, and slag was not sufficiently formed, so that bead sagging occurred. Such results serve as grounds that horizontal fillet welding and vertical welding cannot be continuously performed.

Comparative Examples 4 to 6 employ two-electrode-arc tandem-torch systems. Such a system is a commonly used system employing the same wire type for the two electrodes. The two-electrode system enables high-speed horizontal fillet welding, and provides improved bead shapes, compared with Comparative Examples 1 to 3 employing the single electrode system. However, such a system is not controllable to turn off one of the electrodes, so that, even in vertical welding, arcs are struck from the two electrodes. Thus, regardless of the type of wire, the bead sagged and turned incorrect due to the excessively large volume of the molten pool. For Comparative Examples 4 to 6, such results serve as grounds that horizontal fillet welding and vertical welding cannot be continuously performed.

Comparative Examples 7 to 9 also employ two-electrode-arc tandem-torch systems, but wires of different types were used for the two electrodes. However, such a system is not controllable to turn off one of the electrodes, so that, even in vertical welding, arcs are struck from the two electrodes. Thus, regardless of the type of wire, the bead sagged and turned incorrect due to the excessively large volume of the molten pool. For Comparative Examples 7 to 9, such results serve as grounds that horizontal fillet welding and vertical welding cannot be continuously performed.

Comparative Example 10 employs a two-electrode-arc tandem-torch system that is controllable to stop striking of one of the arcs. However, during horizontal fillet welding, an arc is struck from a single electrode alone, whereas, during vertical welding, arcs are struck from the two electrodes; as a result, in horizontal fillet welding, the bead had an incorrect shape, and defects that are unique to high-speed welding and referred to as undercut and humping were caused. In addition, porosity defects of the primer steel plate were not suppressed. In vertical welding, a phenomenon occurred in which the bead sagged and turned incorrect due to the excessively large volume of the molten pool.

Comparative Example 11 employs a two-electrode-arc tandem-torch system that is controllable to turn off one of the electrodes. As the two electrodes, wires of the same type and the same diameter are mounted. Specifically, flux cored wires having a high slag-forming material ratio were used; in vertical welding, one of the electrodes is turned off, to thereby control the volume of the molten pool to be within an appropriate range. However, the wire diameter is slightly large, and the arc tends to become unstable, and the heat input becomes high, so that the bead shape is acceptable, but slightly poor. In horizontal fillet welding, arcs are struck from the two electrodes to achieve high speed, and the bead has a good shape. However, the flux cored wires having a high slag-forming material ratio did not achieve a reduction in the porosity defects of the primer steel plate.

Comparative Example 12 employs a two-electrode-arc tandem-torch system that is controllable to turn off one of the electrodes. As the two electrodes, wires of the same type and the same diameter are mounted. Specifically, they are flux cored wires having a low slag-forming material ratio. In vertical welding, one of the electrodes is turned off, to thereby control the volume of the molten pool to be within an appropriate range. However, the wire has a low slag-forming material content, so that slag was not sufficiently formed, and bead sagging occurred. In horizontal fillet welding, arcs are struck from the two electrodes to achieve high speed; however, the total amount of slag-forming material was small, so that the bead shape was acceptable but slightly poor. On the other hand, the porosity defects of the primer steel plate were reduced, compared with Comparative Example 11 employing the high slag-forming material content wires; however, the reduction was insufficient.

Comparative Example 13 employs a two-electrode-arc tandem-torch system that is controllable to turn off one of the electrodes. As the two electrodes, wires of the same type and the same diameter are mounted. Specifically, solid wires were used. In vertical welding, one of the electrodes is turned off, to thereby control the volume of the molten pool to be within an appropriate range. However, the wire did not contain a slag-forming material, and slag was not sufficiently formed, so that bead sagging occurred. In horizontal fillet welding, arcs are struck from the two electrodes to achieve high speed; however, the two electrodes did not contain a slag-forming material, so that the bead had a poor shape. On the other hand, porosity defects of the primer steel plate were reduced, compared with Comparative Example 12 employing the low slag-forming material content wires; however, the reduction was insufficient.

Comparative Example 14 employs a two-electrode-arc tandem-torch system that is controllable to turn off one of the electrodes. As the two electrodes, wires of the same type and of different diameters are mounted. Specifically, flux cored wires having a high slag-forming material ratio are used; in vertical welding, the electrode having a larger wire diameter is turned off, to improve the stability of an arc, to achieve good welding. In horizontal fillet welding, arcs are struck from the two electrodes to achieve high speed, and the bead has a good shape. The leading arc was struck with the larger wire diameter, to increase the arc force, to try to suppress porosity defects; however, this reduction was not sufficiently achieved with the flux cored wires having a high slag-forming material ratio.

Comparative Example 15 employs a two-electrode-arc tandem-torch system that is controllable to turn off one of the electrodes. As the two electrodes, wires of the same type and of different diameters are mounted. Specifically, flux cored wires having a low slag-forming material ratio were used; in vertical welding, the electrode having a larger wire diameter is turned off, to improve the stability of an arc and to control the volume of a molten pool to be within an appropriate range; however, the wire had a small amount of slag-forming material, so that slag was not sufficiently formed, and bead sagging occurred. In horizontal fillet welding, arcs were struck from the two electrodes to achieve high speed; however, the total amount of slag-forming material was small, so that the bead shape on the acceptable level was provided. The leading arc was struck with a large wire diameter, to increase the arc force, to try to suppress porosity defects; however, the suppression was still insufficient.

Comparative Example 16 employs a two-electrode-arc tandem-torch system that is controllable to turn off one of the electrodes. As the two electrodes, wires of the same type and of different diameters are mounted. Specifically, solid wires are used. In vertical welding, the electrode having a larger wire diameter is turned off, to improve the stability of an arc and to control the volume of a molten pool to be within an appropriate range; however, the wire does not contain a slag-forming material, so that slag was not sufficiently formed, and bead sagging occurred. In horizontal fillet welding, arcs were struck from the two electrodes to achieve high speed; however, a slag-forming material was not contained, so that the bead had a poor shape. The leading arc was struck with a large wire diameter, to increase the arc force, and the other welding conditions were optimal, so that only suppression of porosity defects was sufficiently achieved.

Comparative Example 17 employs a two-electrode-arc tandem-torch system that is controllable to turn off one of the electrodes. As the two electrodes, wires of different types and of the same diameter are mounted. Specifically, during horizontal fillet welding, for the leading electrode, a solid wire is used, and, for the trailing electrode, a flux cored wire having a high slag-forming material ratio is used; and their wire diameters are each 1.2 mm. In vertical welding, an arc is struck only from the electrode of the flux cored wire, so that the molten pool has an appropriate volume and slag is formed, which enabled good welding. In horizontal fillet welding, arcs are struck from the two electrodes to thereby achieve high speed; the total amount of slag-forming material of the two electrodes is appropriate, so that the bead shape is good. However, the leading arc is struck with a small wire diameter, so that the arc force is insufficient, and the effect of suppressing porosity defects in the primer steel plate was insufficient.

Comparative Example 18 employs a two-electrode-arc tandem-torch system that is controllable to turn off one of the electrodes. As the two electrodes, wires of different types and of the same diameter are mounted. Specifically, during horizontal fillet welding, for the leading electrode, a solid wire is used, and, for the trailing electrode, a flux cored wire having a high slag-forming material ratio is used; and their wire diameters are each 1.6 mm. In horizontal fillet welding, arcs are struck from the two electrodes to thereby achieve high speed; the total amount of slag-forming material of the two electrodes is appropriate, so that the bead shape is good. Since the wire having a large diameter is used as the leading electrode, a strong arc force is generated; and other welding conditions are optimal, so that porosity defects of the primer steel plate are sufficiently suppressed. On the other hand, in vertical welding, an arc was struck only from the electrode of the flux cored wire, to try to provide an appropriate volume of the molten pool. However, the large wire diameter causes poor arc stability under low-current conditions; this caused the necessity of an increase in the current, which caused an increase in the heat input. Thus, sagging of the molten pool occurred and the incorrect shape was caused.

Comparative Example 19 employs a two-electrode-arc tandem-torch system that is controllable to turn off one of the electrodes. As the two electrodes, wires of different types and of the same diameter are mounted. Specifically, during horizontal fillet welding, for the leading electrode, a flux cored wire having a high slag-forming material ratio is used, and, for the trailing electrode, a solid wire is used; and their wire diameters are each 1.2 mm. In vertical welding, an arc is struck only from the electrode of the flux cored wire, so that the molten pool has an appropriate volume and slag is formed, which enabled good welding. In horizontal fillet welding, arcs are struck from the two electrodes to thereby achieve high speed; the total amount of slag-forming material of the two electrodes is appropriate, so that the bead shape is good. However, since the leading electrode has a small wire diameter, the arc force is insufficient, so that the effect of suppressing porosity defects in the primer steel plate was insufficient.

Comparative Example 20 employs a two-electrode-arc tandem-torch system that is controllable to turn off one of the electrodes. As the two electrodes, wires of different types and of the same diameter are mounted. Specifically, during horizontal fillet welding, for the leading electrode, a flux cored wire having a high slag-forming material ratio is used, and, for the trailing electrode, a solid wire is used; and their wire diameters are each 1.6 mm. In horizontal fillet welding, arcs are struck from the two electrodes to thereby achieve high speed; the total amount of slag-forming material of the two electrodes is appropriate, so that the bead shape is good. Since a large diameter wire is used as the leading electrode to generate a strong arc force, porosity defects of the primer steel plate are suppressed. On the other hand, in vertical welding, an arc was struck only from the electrode of the flux cored wire, to try to provide an appropriate volume of the molten pool. However, the large wire diameter causes poor arc stability under low-current conditions, which caused the necessity of an increase in the current. This resulted in an increase in the heat input, so that sagging of the molten pool occurred, and the shape was incorrect.

Comparative Example 21 employs a three-electrode-arc tandem-torch system in which the leading electrode and the trailing electrode strike arcs, and the intermediate electrode always strikes no arc, but only feeds a wire and passes current to perform resistance-heating welding (refer to Fig. 6). The leading electrode and the intermediate electrode are controllable to be turned off. As the leading electrode and the trailing electrode, wires of the same type and of the same diameter are mounted. As the intermediate electrode, a wire different from these wires in type and diameter is mounted. The intermediate electrode is configured to insert the wire into the molten pool formed by the leading electrode, to melt the wire by resistance heating and heat conduction from the molten pool. The wires mounted as the leading electrode and the trailing electrode are flux cored wires having a high slag-forming material ratio; in vertical welding, the leading electrode and the intermediate electrode are turned off, to thereby control the volume of the molten pool to be within an appropriate range. However, the wire diameter is relatively large, so that the arc tends to be unstable and the heat input is increased; as a result, the shape is acceptable but slightly poor. In horizontal fillet welding, arcs are struck from both of the leading electrode and the trailing electrode, and the wire from the intermediate electrode is also melted and added, to thereby achieve high speed, and the bead shape is good. However, the flux cored wire having a high slag-forming material ratio of the leading electrode did not achieve a reduction in the porosity defects of the primer steel plate.

Comparative Example 22 employs a three-electrode-arc tandem-torch system in which the leading electrode and the trailing electrode strike arcs, and the intermediate electrode always strikes no arc, but only feeds a wire (without passing of current), to thereby perform heat conduction welding (refer to Fig. 8). The leading electrode and the intermediate electrode are configured to be turned off. As the leading electrode and the trailing electrode, wires of different types and of the same diameter are mounted; and, as the intermediate electrode, a wire different from these wires in type and diameter is mounted. The intermediate electrode is configured to insert the wire into the molten pool formed by the leading electrode, to melt the wire by only heat conduction from the molten pool. Specifically, during horizontal fillet welding, for the leading electrode, a solid wire is used, and, for the trailing electrode, a flux cored wire having a high slag-forming material ratio is used; and their wire diameters are each 1.2 mm. As the intermediate electrode, a flux cored wire free of slag-forming material is used, and the wire diameter is 0.9 mm. In vertical welding, an arc is struck from only the electrode of the flux cored wire, to thereby provide an appropriate volume of the molten pool and formation of slag, which enabled good welding. In horizontal fillet welding, arcs are struck from the two electrodes, and the wire is melted and added from the intermediate electrode to achieve high speed; and, the total amount of slag-forming material of the three electrodes is appropriate, so that the bead shape is good. However, since the leading electrode has a small wire diameter, the arc force is insufficient, so that the effect of suppressing porosity defects in the primer steel plate was insufficient.

From the results of Examples and Comparative Examples, the range of application of automatic welding using a single robot has been expanded irrespective of the horizontal position or the vertical position, so that the following are expected: enhancement of the efficiency, a reduction in the area of the site, a reduction in the costs, and a reduction in the investment. Thus, the effectiveness of the present invention has been demonstrated.

The present application is based on Japanese Patent Application No. 2016-091389 filed on April 28, 2016, and the entire contents thereof are hereby incorporated by reference.

### Reference Signs List

- 10, 10A, 10B, 10C, 10D, and 10E: welding systems
- 21, 21A, 21B, and 21C: welding torches
- 22, 22A, and 22B: shielding nozzles
- 22d: tip
- 22e: cut surface
- 23, 23A, 23B, and 23C: welding wires
- 31, 31A, and 31B: arcs
- 35: slag
- 36: molten pool
- 100: steel plate (welding target)
- 101: lower plate (welding target)
- 102: vertical plate (welding target)
- 109: primer (anticorrosive material)
- H: horizontal fillet welding
- V: vertical welding
- α: torch angle of leading welding torch
- β: torch angle of trailing welding torch

## Claims

1. A gas-shielded arc welding system for welding a steel plate having a surface coated with an anticorrosive material, the gas-shielded arc welding system comprising:
a welding apparatus including a plurality of welding torches each configured to feed a welding wire serving as a consumable electrode and to strike an arc between the welding wire and a welding target in a stream of shielding gas to achieve welding, the plurality of welding torches being disposed so as to be at least three-dimensionally movable,
wherein the plurality of welding torches at least include two welding torches different from each other in terms of composition of the welding wire and diameter of the welding wire,
when the welding torches are moved in a horizontal direction to perform welding, the welding wire is fed from at least each of the two welding torches and the arc is struck to form a bead, and
when the welding torches are moved in a vertical direction to perform welding, the welding wire is fed from one welding torch of the two welding torches and the arc is struck to form a bead.

2. The gas-shielded arc welding system according to Claim 1, wherein the plurality of welding torches include at least three welding torches, and
when the welding torches are moved in a horizontal direction to perform welding, another welding torch other than the two welding torches is used to melt the steel plate by means of an arc, resistance heating, or heat conduction.

3. The gas-shielded arc welding system according to Claim 1, wherein the welding wire of the welding torch used for welding in the vertical direction is a flux cored wire containing 3.0 to 18.0 wt% of a slag former relative to a total weight of the wire.

4. The gas-shielded arc welding system according to Claim 3, wherein the welding wire of the welding torch used for welding in the vertical direction has a diameter of 1.2 mm.

5. The gas-shielded arc welding system according to Claim 1, wherein the welding wire of a leading welding torch of the two welding torches used for welding in the horizontal direction is a solid wire, or a flux cored wire containing 2.5 wt% or less of a slag former relative to a total weight of the wire.

6. The gas-shielded arc welding system according to Claim 5, wherein the welding wire of the leading welding torch has a diameter of 1.4 to 2.0 mm.

7. The gas-shielded arc welding system according to Claim 5, wherein the welding wire of a trailing welding torch of the two welding torches used for welding in the horizontal direction is a flux cored wire containing 3.0 to 18.0 wt% of a slag former relative to a total weight of the wire, and
the trailing welding torch is used for welding in the vertical direction.

8. The gas-shielded arc welding system according to Claim 1, wherein, in the two welding torches used for welding in the horizontal direction, the welding wire of a leading welding torch has a larger diameter than the welding wire of a trailing welding torch.

9. The gas-shielded arc welding system according to Claim 1, wherein, in the two welding torches for horizontal fillet welding, a torch angle of a leading welding torch is set to 20° to 40° relative to a lower plate, and a torch angle of a trailing welding torch is set to 42° to 60° relative to the lower plate.

10. The gas-shielded arc welding system according to Claim 1, wherein, in the two welding torches for horizontal fillet welding, a leading welding torch includes a shielding nozzle formed by obliquely cutting a portion of a cylindrical tip, and
during the horizontal fillet welding, the shielding nozzle is disposed such that a surface provided by the cutting faces a lower plate.

11. The gas-shielded arc welding system according to Claim 1, wherein a welding torch not used during welding in the vertical direction is movable forward and backward in a feeding direction of the welding wire.

12. The gas-shielded arc welding system according to Claim 1, wherein a welding torch not used during welding in the vertical direction is turnable relative to a weld line.

13. A gas-shielded arc welding method comprising using the gas-shielded arc welding system according to any one of Claims 1 to 12,
wherein, during horizontal fillet welding, in the welding wire of a leading welding torch, a current of 380 A or more is applied, and current/voltage is adjusted to be 12.0 or more and 18.0 or less in order to strike the arc as a buried arc.

14. The gas-shielded arc welding method according to Claim 13, wherein, during the horizontal fillet welding, current and voltage applied to the welding wire of a trailing welding torch are adjusted to a current/voltage of 8.0 or more and 11.0 or less in order not to strike a buried arc.
